# EUROPEAN PATENT APPLICATION

(11) **EP 3 026 625 A1**
(43) Date of publication of application: **01.06.2016**
(21) Application number: 15184830.6
(22) Date of filing: 05.08.2002
(51) Int. Cl.: G06Q 40/04

(54) **SYSTEM AND METHOD FOR TRADING OPTIONS**

(62) Divisional of application: 02751379.5
(71) Applicant: Volbroker.Com Limited, London EC4V 2AR (GB)
(72) Inventor: RODGERS, Kevin, London, WC2A 3NA (GB); WARD, Dirk, London, WC2A 3NA (GB)
(74) Representative: Clarke, Geoffrey Howard

(57) **Abstract**

Computerised systems and methods for trading an option contract for a financial instrument are disclosed. According to some embodiments, methods of providing automatic price quotations for a requested option contract using a computerised trading system comprise users each having an internal volatility surface and providing a protocol for polling the internal volatility surface for prices on the requested option contract wherein the prices from the poll are compared and the lowest price is provided to the user requesting the option contract.

## Description

The invention is directed to a system and method for trading option contracts such as currency options.

In financial markets, Options (or Option Contracts) are an important element of investing in financial markets; Options contracts facilitate management of risk and generation of income and exist for a number of types of financial instruments; there are markets for trading in option contracts for currency, commodities, stocks, bonds and other financial instruments. A financial instrument is just one example of an underlying asset for which options contracts can be traded.

Typically, there are two types of option contracts: a call option and a put option. The call option contract gives its holder a right to buy a specific quantity of an underlying asset, for example a financial instrument, at a specified price on or before an expiration date, i.e. within a specified period of time. The specified price is known as a "strike price" and is a price at which a purchaser of the option contract can exercise the option to buy or sell the underlying financial instrument. In the case of a currency option, the strike price is the exchange rate at which the purchaser of the contract may exercise.

The specified period of time is known as a "tenor" and is an amount of time until the expiration date. In the currency options market there are standard tenors for the majority of contracts traded. These include expiry dates set in the future by one week, one month, two months, three months, six months, nine months and one year. Some options are limited to exercise on a certain date whereas others may be exercised at any time from inception until expiration. Options having a "European exercise" can only be exercised on the last day of their life, whereas options having an "American exercise" can be exercised at any time prior to expiration.

Call option contracts are bought and sold for prices known as "Premiums" and, in contrast with the right of the purchaser to exercise the option to buy the underlying financial instrument, the seller, or writer, of the call option contract has an obligation to sell the underlying financial instrument if the purchaser of the call option decides to exercise the option to buy the underlying financial instrument.

The put option contract gives its holder a right to sell a specific quantity of an underlying financial instrument at a strike price on or before an expiry date. Again, the put option contract has an associated tenor and is bought/sold for a "Premium". As in the case of call option contracts, the seller (writer) of the put option contract has an obligation to buy the underlying financial instrument if the purchaser of the put option decides to exercise the option to sell the underlying financial instrument.

Consequently, in the context of currency, a currency option contract grants the purchaser of the currency option contract the right, but not the obligation, to make a specified exchange of a pair of foreign currency, buying one of the pair and selling the other in specified amounts, at a specified exchange rate known as a "strike rate", which is the rate at which the option contract is exercisable. The exchange rate of each pair of currency is quoted in terms of the amount of one currency required to purchase a single unit of the other, assignment of one of the pair of currency as the single unit is determined by market convention.

Currency options derive their value in part from the exchange rate level at which the underlying currency pair is trading. In common with option contracts for other underlying financial instruments, the currency option contract has an associated tenor. As the exercise of the currency option contract necessarily entails the purchase of one currency and the simultaneous sale of the other, the currency being purchased by a currency option-holder is referred to as a "call" currency, the other is referred to as a "put" currency. All currency options contracts specify, at their inception, the call and put currencies and the amount of currency being traded. Calls on the single unit currency of an underlying currency pair, known as a "call currency", are referred to simply as "call options" or "calls". Similarly, puts on the single-unit currency of the underlying currency pair are referred to as "put options" or "puts" for simplicity.

When a currency option contract is exercised, the monetary value of the underlying transaction is dictated by an exchange rate known as a "spot rate". The spot rate is the current market exchange rate of the underlying currency pair to the option contract. The spot rate for currency options is the quotation for an exchange of currencies occurring typically two bank business days after the date of quotation. For a call option, when the strike rate is below the spot rate of exchange, the option is said to be "in-the-money". Similarly, when the strike rate is above the spot rate of exchange, the call option is said to be "out-of-the-money". For a put option, the reverse is true. When the strike rate is below the spot rate of exchange, the put option is "out-of-the-money", whereas when the strike rate is above the spot rate, the put option is "in-the-money". In the cases of both call and put option contracts, the option contract is said to be "at-the-money" if the strike rate is the same as, or substantially the same as, the spot rate.

Currency options are typically identified by and traded on the basis of a parameter known as "delta" rather than the strike rate in monetary terms. The delta is a statistical relationship that measures the sensitivity of the value of an option contract to the market price movement of the underlying currency-pair of the option contract. The delta, as a ratio, indicates an absolute change in value of the option contract as a percentage of the change in the spot rate for the underlying currency-pair. The delta parameter is expressed as a percentage value from 0 to 100. Hence, an option whose value changes by half of the market rate has a delta of 50%. As mentioned above a call option gains value as the spot rate of the underlying currency pair appreciates and will lose value as the spot rate of the underlying currency pair depreciates. Thus, for the call option, delta is near 100% when the spot rate for the underlying currency-pair is well above the strike rate of the call option, the option being in-the-money. Likewise, delta is near zero when the spot rate for the underlying currency-pair is well below the strike rate of the call option, the option being out-of-the-money. Again, the reverse is true of put options, i.e. a put option is in-the-money when delta is near zero and the spot rate for the underlying currency-pair is well below the strike rate of the put option, and a put option is out-of-the-money when delta is near 100% and the market exchange rate, or spot rate, for the underlying currency-pair is well above the strike rate of the put option.

The prices for currency options are often quoted in units of volatility, rather than in monetary terms. Volatility in this case is a market determined rate upon which option value is determined. It is the annualised standard deviation for the underlying currency being traded and bears a direct relationship to the value of the option. This volatility figure, along with other parameters relating to the options contract, known as "contract specifics", and market prices are used in combination with the Black-Scholes options pricing equation in order to arrive at the "premium" or value of the option contract. The Black-Scholes option pricing equation is a recognised methodology in the art. Since the value of all other variables in the Black-Scholes equation are either determined (strike rate, tenor, call and put currencies), or determinable (the spot rate, forward rate, interest rates in each currency), volatility prices for option contracts translate into cash prices upon which both the buyer and the seller of the option contract nearly always agree. Volatility is a key concept in options trading because it is typically used as a proxy for the premium price by all market participants. After an option contract is bought or sold at a specified volatility, the volatility and agreed inputs are converted into a monetary purchase price for the option contract using the Black-Scholes equation.

As is known in the art, banks provide currency option products to their clients, but also deal with each other in order to manage currency risk. Currency options in the, so-called, interbank market are primarily traded between banks on a one-to-one basis (direct market) or are brokered by a currency options broker (broker market).

In the direct market, banks communicate with each other directly. One bank contacts another requesting a price on an option contract that it wishes to buy or sell in order to manage the risk in its portfolio. In this respect, deals between a given pair of banks are typically transacted on a "delta neutral" basis, namely the sum of deltas for option contracts held by each of the given pair of banks is substantially zero. Another technique employed by banks in the direct market is known as "delta hedging", meaning that an instantaneous "spot risk" to each bank, i.e. at a given point in time, the economic risk that derives from movement of the spot rate, quantified by delta, arising as a result of a purchase of an option contract, is hedged by the banks also agreeing to exchange an amount of the underlying currencies that offsets the option contract's sensitivity to the spot rate of its underlying currencies. These "delta hedges" are usually exchanged for "spot" value i.e. at the spot rate (as mentioned above, by convention, usually two banking days after the transaction date), but are frequently exchanged for "forward" (future) value. Consequently, the exchange of the amount of underlying currency constituting the delta hedge is effected at the same underlying exchange rate (spot rate) upon which the option contract's value is determined, thus removing the spot risk from the options transaction.

In the direct market, the bank that is contacted may "make a market" on the option, meaning that it provides both a bid (a price at which it is willing to buy an option contract) and an offer (a price at which it is willing to sell the same option contract) to the bank seeking the price on the option. The bank seeking the price may choose to buy, sell or do nothing. The benefit of the direct market is that a bank may contact many banks and deal with each of them, thus transferring a lot of risk to a number of different banks. However, the disadvantage of the above described direct market is that the bank will have to cross the bid/offer spread (the difference in price between the offer to sell and the bid to buy the same option contract) and will therefore not necessarily find the best price in the market.

In the broker market, the bank (referred to as the "Interest") seeking a price on an option contract that is not commonly traded contacts a broker who in turn makes a market on the option as a result of contacting many other banks. The particular option contract that the Interest wishes to deal is known as the "specific-interest". In this respect, in the direct market, option contracts for which specific requests to trade have to be made and are not deemed "most traded" option contracts are usually referred to as "specific-interest" option contracts. These are typically option contracts that have one or more special features. By convention, specific interests are posted into the dealing community on a request for quote ("RFQ") basis by the interested party, at which point dealers will make one-or two-way prices.

The broker attempts to solicit a price on the specific-interest option from banks called "market makers". The broker then assembles the best bid and best offer from the prices obtained from the market makers, and the broker provides this composite price to the Interest bank. At no stage until a deal is done will anyone except the broker know the identity of either the market maker banks or the Interest bank. When the Interest bank sees the price, it may buy or sell or do nothing, or, if it wishes, contribute a better bid or offer to the composite price for further broking by the broker.

Once the Interest bank has seen the composite price and (a) has responded by providing a bid, or an offer, or (b) does nothing, the broker may then show the prices obtained to other banks. The other banks may in turn provide better bids and offers inside the composite price until the bid and offer meet and a deal is made. At this point the broker will identify the counterparties to each other, and, if they are willing to deal with each other from a credit perspective, the remaining economic details of the deal are agreed and the deal is confirmed. The deal occurs bilaterally between the two counterparty banks. The broker is not involved as a principal but acts as an arranger in return for a fee.

One disadvantage of the broker market is that the banks themselves must undertake a final stage of credit checking after a bid and offer are met and after the identity of each party is revealed. The imperfect nature of the credit process can cause problems in a fast-moving market.

Additionally, all currency option contracts, like all other derivatives, reference the price of an underlying asset. In the case of currency option contracts, the price of the underlying asset is dictated by the foreign exchange spot rate. Consequently, another disadvantage of the broker market is that market makers are often held to certain contract option prices when the spot rate for the underlying currency-pair changes dramatically. Typically, market markers do not like to be held to quoted prices as the spot rate of exchange moves rapidly and may be "breaking out" of a range, in which case the market perceives options to be cheap and will try to buy them on the market maker's offer, or because the price is drifting back into an old range which can mean that the market is looking to sell. Brokers attempt to protect market makers by not quoting their prices if the spot rate moves dramatically, but this is done on an ad-hoc basis.

Similarly, market makers wish to avoid having stale prices on the market in situation other than when the spot rate moves dramatically, for example, if they have traded sufficiently in a given option contract from the point of view of keeping a certain balance in their portfolio. Brokers try to avoid quoting stale prices, but the definition of "stale" is generally not clearly defined, and the misunderstandings that arise from this lack of clarity frequently result in prices being withdrawn from the market too soon or too late.

A form of trading that does not go through either the direct or broker markets is so-called "autodealing" or "volatility surface trading." The prices for puts and calls are quoted in units of volatility, rather than in monetary terms and, as mentioned above, the volatility of an option contract can be calculated if the spot rate, strike price, time to expiry and the foreign currency interest rate and domestic currency interest rate are known, the volatility being a measure of the change in value of the option contract.

A volatility surface is a three-variable relationship wherein a "volatility price" can be calculated so long as a given tenor and given strike rate are provided. A trading system, using information from volatility surfaces, must have or be able to calculate the volatility of any option that is requested. After an option contract is bought or sold at a specified volatility, the volatility is converted into a monetary purchase price for the option contract using the Black-Scholes equation.

As large banks typically provide prices on many option contracts each day, both to traditional clients and to smaller banks, to avoid overloading users with hundreds of pricing requests, many of the large banks have internally implemented volatility surfaces, which allow small trades to be priced automatically. The impetus behind the creation of these systems has been to reduce the manual workload for traders, whose time is valuable. The banks therefore have a "surface" of volatility, defining the volatility, and thus price, of any option that falls within the defined two-dimensional space of tenor and strike rate. This surface is updated throughout the trading day. The normal implementation has been to provide a system with a series of volatilities (hence prices) for commonly traded strike prices and tenors. The system can then interpolate according to certain rules a "surface" of volatilities for any desired strike price and tenor.

A bank customer who requests an option contract at a particular tenor and a particular strike price is given a price quote from the surface for the transaction in terms of volatility, which is convertible into a monetary price as mentioned above. The above mentioned "certain rules" tend to vary from bank to bank but are broadly similar in general terms. Once the "surface" has been created, it is a relatively simple matter to provide a volatility for any option simply by looking up the correct strike price and tenor. Users of the system have the advantages of quickly pricing small specific interests. However, as mentioned above, the interpolation of volatility surfaces does nevertheless tend to vary in some way from bank to bank because each bank has a separate set of, typically slightly different, rules for adopting the volatility surface.

In this respect, although the banks' interpolation rules are broadly similar, the differences are sufficient to cause economically significant differences in volatilities from different banks for a particular interpolated option. This can lead to arbitrage opportunities, wherein market participants take advantage of small price differences in equivalent option contracts, to the detriment of the banks making the market.

From the above-described explanation of the trade of options contracts between banks, it can be seen that the design and implementation of any automatic or computerised trading system is difficult. Designing a system which accounts for the creditworthiness of the buyer and seller users of the system and separately maintains current prices for options is especially difficult since there is a complex relationship between credit worthiness and the acceptable option contract price. Existing electronic or computerised trading systems which are not primarily designed for trading options contain inherent inefficiencies in either or both of these systems components and in the time, cost, resources and price transparency.

U.S. Patent No. 6,014,627 (Togher et al.) describes a computerised trading system dealing with financial instruments such as foreign currency by selectively distributing anonymous price quotes in accordance with pre-established credit limits. The system reviews credit information provided by counterparties using the system and automatically determines whether a predetermined level of credit is currently available from a potential party to a transaction prior to submitting a price quotation to the other potential party based on the information provided. By prescreening bids and offers input by parties, each party is only provided with "dealable" prices from counterparties for which credit compatibility exists. The system is directed to trading foreign currency and not currency options and thus does not provide the more complex system requirements for trading option contracts.

U.S. Patent No. 5,924,082 (Silverman et al.) describes a negotiated matching system that uses a "matching computer" to identify a bid and an offer from suitable counterparties based on transaction data and ranking data supplied by each of the parties. Matched counterparties are then provided a communication link to further negotiate the terms of the transactions.

U.S. Patent No. 5,787,402 (Potter et al.) describes a system for trading currencies in which a user inputs the characteristics of the transaction it desires and the system automatically generates an offer in response to the user's request. The user has a specified amount of time to accept the offer, after which the offer is updated.

U.S. Patent No. 5,905,974 (Fraser et al.) describes a system for automated trading in which bids and offers are displayed on customers' terminal screens. A customer may "hit" a bid or "lift" an offer, which initiates transactions at a set price point. The system uses five different trading states in which customers with active bids or offers are given priority to make trades. The system is designed to reward current customers providing active bids and offers.

U.S. Patent 5,832,462 (Midorikawa et al.) describes an electronic dealing system that manages credit lines between customers and updates the credit lines as transactions occur between the customers. It also describes grouping a set of customers into a home group for setting a common credit line between the group and another customer.

The trading of option contracts in financial instruments presents varying unique complexities which have not been adequately addressed by the prior art systems such as those discussed above.

According to a first aspect of the present invention, there is provided a computerised system for trading an option contract for a financial instrument, the system comprising: a computer network comprising a plurality of terminals each capable of communicating with a central computing unit; a volatility data storage unit arranged to store, when in use, at least one set of volatility data associated with the option contract and respectively obtained from at least one of the plurality of terminals; a calculation unit supported by the central computing unit and arranged to implement, when in use, a protocol for identifying from the at least one set of volatility data a highest bid to buy the option contract and a lowest bid to sell the option contract, the highest bid to buy the option contract and the lowest bid to sell the option contract defining a first range; and a price communications unit supported by the central computing unit and arranged to communicate, when in use, to a first of the plurality of terminals the highest bid to buy the option contract and/or the lowest bid to sell the option contract in response to a request for a quote from the first of the plurality of terminals for the options contract.

Preferably, the plurality of terminals comprises: a second terminal arranged, when in use, to communicate an associated set of volatility data to the central computing unit, the associated set of volatility data comprising an associated bid to buy and an associated offer to sell defining a second range; and the system further comprises: an arbitrage identification unit capable of accessing the highest bid to buy the option contract and the lowest bid to sell the option contract identified by the calculation unit and, when in use, arranged in response to the communication of the associated set of volatility data to determine if the second range does not mathematically overlap the first range.

Preferably, the central computing unit is arranged to identify the existence of arbitrage to the second terminal in response to the second range not mathematically overlapping the first range.

Preferably, the at least one set of volatility data is obtained from at least one volatility surface. More preferably, the at least one volatility surface is respectively accessible by at least one associated terminal of the plurality of terminals.

Preferably, the first terminal comprises a user interface unit arranged to communicate, when in use, the highest bid to buy the option contract and the lowest bid to sell the option contract to a user of the first terminal.

Preferably, the central computing unit is arranged to receive an indication that at least one of the at least one set of volatility data associated with the option contract has changed. More preferably, the volatility data storage unit is arranged to receive an updated set of volatility data corresponding to the at least one of the at least one set of volatility data that has changed.

Preferably, the first terminal is prevented from submitting for trading the associated set of volatility data where the first range does not mathematically overlap the second range.

Preferably, the first terminal is prevented from executing a purchase of the option contract when the first range does not mathematically overlap the second range.

Preferably, the central computing unit permits, when in use, the second terminal to trade the option contract with a terminal associated with the lowest bid to sell in response to the first range not mathematically overlapping the second range.

Preferably, the central computing unit permits, when in use, the second terminal to trade the option contract with a terminal associated with the highest offer to buy in response to the first range not mathematically overlapping the second range.

Preferably, the at least one set of volatility data comprises a time-limited set of volatility data having a predetermined period of time associated therewith, the central computing unit being arranged, when in use, to withdraw the time-limited set of volatility data in response to the predetermined period of time expiring.

Preferably, the at least one set of volatility data comprises a value-limited set of volatility data having a predetermined threshold value associated therewith, the central computing unit being arranged, when in use, to withdraw the value-limited set of volatility data in response to a current market, or spot, price for the option contract being equal to or crossing the threshold value.

Preferably, the system further comprises: a first tier of users, the central computing unit supporting a protocol to permit the first tier of users to enter runs of offers to sell and bids to buy option contracts, enter offers to sell specific interest option contracts and bids to buy specific interest option contracts, deal on offers to sell option contracts or bids to buy option contracts and improve on outstanding offers to sell option contracts or bids to buy option contracts.

Preferably, the system further comprises: a second tier of users, the central computing unit supporting a protocol to permit the second tier of users to enter runs of offers to sell option contracts and bids to buy option contracts, deal on offers to sell option contracts or bids to buy option contracts and improve on outstanding offers to sell option contracts or bids to buy option contracts, the central computing unit supporting a protocol to preclude the second tier of users from entering offers to sell specific interest option contracts and bids to buy specific interest option contracts.

Preferably; the system further comprises: a third tier of users, the central computing unit supporting a protocol to permit the third tier of users to deal on offers to sell or bids to buy option contracts, the central computing unit supporting a protocol to preclude the third tier of users from entering runs of offers to sell and bids to buy option contracts, entering offers to sell specific interest option contracts and bids to buy specific interest option contracts, and improving on outstanding offers to sell option contracts or bids to buy option contracts.

According to a second aspect of the present invention, there is provided a server apparatus for trading an option contract for a financial instrument, the apparatus comprising: a communications unit for communicating with a plurality of terminals; a volatility data storage unit for at least one set of volatility data associated with the option contract obtained from at least one of the plurality of terminals, the volatility storage unit being arranged to store, when in use, the at least one set of volatility data; a calculation unit arranged to implement, when in use, a protocol for identifying from the at least one set of volatility data a highest bid to buy the option contract and a lowest bid to sell the option contract, the highest bid to buy the option contract and the lowest bid to sell the option contract defining a first range; wherein the communications unit is arranged to communicate, when in use, to a first of the plurality of terminals the highest bid to buy the option contract and/or the lowest bid to sell the option contract in response to a request for a quote from the first of the plurality of terminals for the options contract.

According to a third aspect of the present invention, there is provided a client terminal apparatus for trading an option contract for a financial instrument, the apparatus comprising: a communications unit for communicating with a central computing unit; a volatility data provision unit arranged to obtain, when in use, a set of volatility data associated with the option contract; a calculation unit for obtaining at least one set of volatility data from the central computing unit, the calculation unit being arranged to implement, when in use, a protocol for identifying from the at least one set of volatility data a highest bid to buy the option contract and a lowest bid to sell the option contract, the highest bid to buy the option contract and the lowest bid to sell the option contract defining a first range; and a user interface arranged to communicate, when in use, to a user the highest bid to buy the option contract and/or the lowest bid to sell the option contract.

According to a fourth aspect of the present invention, there is provided a method of trading an option contract via a computer network comprising a plurality of terminals each capable of communicating with a central computing unit, the method comprising the steps of: respectively obtaining from at least one of the plurality of terminals at least one set of volatility data associated with the option contract; identifying from the at least one set of volatility data a highest bid to buy the option contract and a lowest bid to sell the option contract, the highest bid to buy the option contract and the lowest bid to sell the option contract defining a first range; and communicating to a first of the plurality of terminals the highest bid to buy the option contract and/or the lowest bid to sell the option contract in response to a request from the first of the plurality of terminals for the options contract.

Preferably, the method further comprises: providing an additional set of volatility data, the additional set of volatility data comprising an associated bid to buy and an associated offer to sell defining a second range; accessing the highest bid to buy the option contract and the lowest bid to sell the option contract, and in response to the provision of the additional set of volatility data, determining if the second range does not mathematically overlap the first range.

According to a fifth aspect of the present invention, there is provided a method of processing volatility data associated with an option contract via a computer network comprising a plurality of terminals each capable of communicating with a central computing unit, the method comprising the steps of: respectively obtaining from at least one of the plurality of terminals at least one set of volatility data associated with the option contract; identifying from the at least one set of volatility data a highest bid to buy the option contract and a lowest bid to sell the option contract, the highest bid to buy the option contract and the lowest bid to sell the option contract defining a first range; and communicating to a first of the plurality of terminals the highest bid to buy the option contract and/or the lowest bid to sell the option contract in response to a request from the first of the plurality of terminals for the options contract.

Preferably, the method further comprises: providing an additional set of volatility data, the additional set of volatility data comprising an associated bid to buy and an associated offer to sell defining a second range; accessing the highest bid to buy the option contract and the lowest bid to sell the option contract, and in response to the provision of the additional set of volatility data, determining if the second range does not mathematically overlap the first range.

According to a sixth aspect of the present invention, there is provided a computer program element comprising computer program code means to make a computer execute the method as set forth above in accordance with the fourth or fifth aspects of the present invention.

Preferably, the computer program element is embodied on a computer-readable medium.

According to a seventh aspect of the present invention, there is provided a system for providing a price quotation on a financial instrument option contract, the system comprising: a plurality of users; one or more volatility surfaces, each maintained by a user; a request for an option contract on a financial instrument, the request provided by a user; a protocol for polling the at least one or more volatility surfaces to obtain one or more prices corresponding to the requested option contract; a protocol for determining the highest bid to buy and lowest offer to sell among the prices obtained; and a communication providing the highest bid to buy and lowest offer to sell to the user requesting the option contract.

Preferably, the system further comprises a system for eliminating an arbitrage between two or more prices, each price comprising a bid and an offer in volatility units, the system for eliminating arbitrage comprising: a protocol for determining whether the highest bid to buy is higher than the lowest offer to sell; and a protocol for preventing the user from trading on both the highest bid to buy and the lowest offer to sell if the highest bid to buy is higher than the lowest offer to sell.

Preferably, the system further comprises a system for avoiding arbitrage, the system comprising: a communication providing a notification that a user's volatility surface has changed; an indicative option contract having a price held by the system, the price comprising an offer to sell and a bid to buy; a protocol for polling the user's volatility surface to obtain a price for the indicative option contract; a protocol for comparing the price of the indicative option contract obtained from the user's volatility surface to the price of the indicative option contract held by the system to determine whether a bid to buy the indicative option contract is higher than an offer to sell the indicative option contract; and a communication comprising a notification of arbitrage if a bid to buy the indicative option contract is higher than an offer to sell the indicative option contract.

According to an eighth aspect of the present invention, there is provided a computerised system for trading currency options, the system comprising: a system server; a plurality of users, each user assigned to one of a plurality of tiers, the tiers including: a first tier of users, the system server operating a protocol to permit the first tier users to enter runs of offers to sell currency options and bids to buy currency options, enter offers to sell specific interest currency options and bids to buy specific interest currency options, deal on offers to sell currency options or bids to buy currency options, and improve on offers to sell currency options or bids to buy currency options; and a second tier of users, the system server operating a protocol to permit the second tier users to enter runs of offers to sell currency options and bids to buy currency options, deal on offers to sell currency options or bids to buy currency options, and improve on offers to sell currency options or bids to buy currency options, the system server operating a protocol to preclude the second tier users from entering offers to sell specific interest currency options and bids to buy specific interest currency options; workstations for receiving offer and bid information on currency options from users, and for displaying offer and bid information on currency options to users; and a communication link that receives and transmits communications between the users of the system and the system server, including communications to users that are parties to a completed currency option contract providing information concerning the completed contract.

Preferably, a user may specify a spot-out corresponding to an offer or a bid entered by the user.

Preferably, a user may specify a time-out corresponding to an offer or a bid entered by the user.

According to a ninth aspect of the present invention, there is provided a computerized system for trading currency options, the system comprising: a system server; a plurality of users, each user assigned to one of a plurality of tiers, the tiers including: a first tier of users, the system server operating a protocol to permit the first tier users to enter runs of offers to sell and bids to buy options, enter offers to sell specific interest currency options and bids to buy specific interest currency options, deal on offers to sell currency options or bids to buy currency options and improve on outstanding offers to sell currency options or bids to buy currency options; a second tier of users, the system server operating a protocol to permit the second tier users to enter runs of offers to sell currency options and bids to buy currency options, deal on offers to sell currency options or bids to buy currency options and improve on offers to sell currency options or bids to buy currency options, the system server operating a protocol to preclude second tier users from entering offers to sell specific interest currency options and bids to buy specific interest currency options; and a third tier of users, the system server operating a protocol to permit the third tier users to deal on offers to sell or bids to buy options, the system server operating a protocol to preclude third tier users from entering runs of offers to sell currency options and bids to buy currency options, entering offers to sell specific interest currency options and bids to buy specific interest currency options and improving on offers to sell or bids to buy options; and workstations for receiving offer and bid information on currency options from users and for displaying offer and bids information on currency options to users; and a communication link that receives and transmits communications between the users of the system and the system server, including communications to users that are parties to a completed system transaction providing information concerning the completed transaction.

Preferably, the system server, operates a protocol permitting a user to provide credit criteria via the communication link specifying counterparties with which the user will deal, the protocol operating such that the user may access only offers to sell and bids to buy from the counterparties that meet the credit criteria.

Preferably, the credit criteria provided comprises a maximum deal amount.

Preferably, the runs entered by the first tier users and the second tier users are volatility runs.

Preferably, the options traded on the system have a tenor one week to one year.

Preferably, the options traded have a tenor selected from a group of tenors consisting of: one week, one month, two months, three months, six months, nine months and one year.

Preferably, the option contracts are entered and displayed in units of volatility.

Preferably, the first tier users and the second tier users can access a display of a volatility run.

Preferably, the display of the volatility run comprises a current market rate for each of the options in the volatility run until a volatility run is entered by a user.

Preferably, the first tier users are required to periodically submit volatility runs.

Preferably, the information transmitted to the parties of the completed system currency option contract includes a conversion of the cost of the contract from units of volatility into a monetary price.

Preferably, the system further comprises a system for automatically withdrawing a quote for a price of a financial instrument option contract, the system for automatically withdrawing a quote comprising: a quote for an offer to sell or a bid to buy an option contract provided by a user; a period of time provided by the user corresponding to the quote; and a protocol for withdrawing the quote upon expiration of the corresponding period of time.

Preferably, the system for automatically withdrawing a quote further comprises: a quote for an offer to sell or a bid to buy an option contact provided by a user, the option contract for a currency pair having a current market price; a defined value for the currency pair provided by the user; a current market price for the currency pair; a protocol for comparing the user's defined value for the currency pair to the current market price for the currency pair; and a protocol for withdrawing the user's quote if the user's defined value for the currency pair equals the current market price for the currency pair.

According to a tenth aspect of the present invention, there is provided a method for providing a price quotation on a financial instrument option contract, the method comprising: receiving a request for an option contract on a financial instrument, the request provided by one of a plurality of users; polling one or more volatility surfaces, each maintained by a user, to obtain one or more prices corresponding to the requested option contract; determining the highest bid to buy and lowest offer to sell among the prices obtained; and communicating the highest bid to buy and lowest offer to sell to the user requesting the option contract.

Preferably, the method further comprises steps for eliminating an arbitrage between two or more prices obtained, wherein each price comprises a bid and an offer in volatility units, the steps comprising: determining whether the highest bid to buy is higher than the lowest offer to sell; and preventing the user from trading on both the highest bid to buy and the lowest offer to sell if the highest bid to buy is higher than the lowest offer to sell.

Preferably, the method further comprises steps for avoiding arbitrage, the steps comprising: receiving a notification that a user's internal volatility surface has changed; polling the user's internal volatility surface to obtain a price of an indicative option contract, the price comprising an offer to sell and a bid to buy, the indicative option contract having a price held by a system server; comparing the price of the indicative option contract obtained from the user's volatility surface to the price of the indicative option contract held by the system server to determine whether a bid to buy the indicative option contract is higher than an offer to sell the indicative option contract; and communicating a notification of arbitrage if a bid to buy the indicative option contract is higher than an offer to sell the indicative option contract.

According to an eleventh aspect of the present invention, there is provided a method for trading of option contracts on a computer system comprising: providing to a plurality of users offers to sell and bids to buy options; receiving from first tier users (i) runs of offers to sell and bids to buy options and (ii) commands to deal on offers to sell or bids to buy options and (iii) improvements to offers to sell or bids to buy options; receiving from second tier users (i) commands to deal on offers to sell or bids to buy options and (ii) improvements to offers to sell or bids to buy options; receiving from third tier users commands to deal on offers to sell or bids to buy options; and transmitting information concerning a completed transaction to all users party to the transaction.

Preferably, the method further comprises receiving credit criteria from the users whereby each user specifies the other users with which the user will deal; and transmitting offers to.sell and bids to buy option to buy option contracts provided by the other users that meet the criteria specified by the user.

Preferably, the information transmitted concerning a completed transaction includes names of the parties to the completed transaction, tenor, volume of currency, price and date and time that the transaction was completed. More preferably, the price is provided in units of volatility. Very preferably, the information concerning a completed transaction includes a price in volatility units and monetary units.

Preferably, the runs received from the first tier users are volatility runs.

Preferably, the volatility runs are received periodically from each of the first tier users.

According to a twelfth aspect of the present invention, there is provided a method for managing the trading of option contracts as set forth in the eleventh aspect of the present invention, further comprising steps for automatically withdrawing a quote for a price of an option contract, the steps comprising: receiving a user's quote for an offer to sell or a bid to buy an option contract; receiving a period of time defined by the user corresponding the quote; and withdrawing the quote upon expiration of the corresponding period of time.

Preferably, the method further comprises the steps of: receiving a user's quote for an offer to sell or a bid to buy an option contract, the option contract for a currency pair having a current market price; receiving a defined value for the currency pair provided by the user; comparing the user's defined value for the currency pair to the current market price for the currency pair; and withdrawing the user's quote if the user's defined value for the currency pair equals the current market price for the currency pair.

According to a thirteenth aspect of the present invention, there is provided a method updating the prices for an option contract on a financial instrument, the option contract available for trade on an electronic trading system, the method comprising: compiling a list of prices, each provided by one of a plurality of users, the prices comprising offers to sell and bids to buy an option contract for a financial instrument; polling one or more volatility surfaces corresponding to the option contract, the internal volatility surfaces each maintained by the one or more users; adjusting the listing of the price for the option contract provided by each user, such that the adjusted price equals the price obtained from the user's volatility surface; and communicating a notice of the adjustment to the user.

According to a fourteenth aspect of the present invention, there is provided a method for trading options contracts on currency options on a system restricted to eligible users comprising: determining a user's eligibility to trade on the system according to criteria, the criteria including creditworthiness; restricting the activities of the user on the system based on the user's eligibility; receiving one or more offers to sell and bids to buy for currency option contracts from the user; and requiring that acceptance of an offer to sell or a bid to buy by the user creates a binding contract.

According to a fifteenth aspect of the present invention, there is provided a method for electronic trading of currency options contracts among plurality of users comprising: providing a user a list of counterparties; receiving from the user conditions that each counterparty must meet to deal with the user, the conditions including whether the counterparty accept a contract with the user, the maximum tenor the user will accept on contracts with the counterparty and the size of the option the user will accept with the counterparty; and displaying to the user the prices on option contracts from counterparties that meet that user's conditions for dealing.

According to a sixteenth aspect of the present invention, there is provided a method of entering a volatility run into network-based electronic trading system, the method comprising: accessing a network server of the electronic trading system using a web browser; receiving a display of a current market rate for each option contract in the series of tenors; submitting desired prices for each option contract in the series of tenors to the electronic trading system, and receiving a display of the volatility run submitted to the electronic trading system.

Preferably, the market rate for each bid is the current highest bid to buy the option contract at that tenor in the system and the market rate for each offer is the current lowest offer to sell the option contract at that tenor in the system.

According to a seventeenth aspect of the present invention, there is provided a method for trading options on financial instruments with one or more anonymous counterparties over a computer network comprising: submitting a price for an option.contract to the network server; submitting criteria for selecting counterparties corresponding to the price to the network server; submitting a request to the network server that the price is made available to counterparties meeting the criteria; receiving one or more responses to the price from the network server, each response from a counterparty meeting the criteria; and dealing on the option contract with one or more responding counterparties.

Preferably, the criteria includes whether a counterparty is most active among all counterparties in a stated period of time for a class of traded instrument.

According to an eighteenth aspect of the present invention, there is provided a method for receiving a price quotation on a financial instrument option contract over a computer network having a network server comprising: providing a request for an option contract on a financial instrument to the network server; providing a second request for a communication of a lowest price on the option contract to the network server, wherein the lowest price is determined upon a comparison of one or more prices corresponding to the option contract, the one or more prices obtained by polling one or more volatility surfaces each maintained by a user; and receiving the lowest price on the option contract from the network server.

According to a nineteenth aspect of the present invention, there is provided a volatility surface for obtaining a price on a currency option contract for a currency pair, the volatility surface comprising one or more contributions to the volatility surface, the contributions provided by a plurality of users, the contributions comprising: a volatility price corresponding to an option contract for each of a series of deltas and expiring every business day in the year following the date of the contribution; and a bid/offer spread.

Preferably, the series of deltas are from 5% to 95%.

Preferably, the bid/offer spread is provided in terms of units of volatility.

According to a twentieth aspect of the present invention, there is provided a method for updating the volatility surface of the nineteenth aspect of the present invention, wherein the currency pair has a currently traded volatility run, comprising the steps of: adjusting 50%-delta volatilities on the volatility surface to equal 50%-delta volatilities of the currently traded volatility run; and adjusting volatilities for options whose deltas are not 50% to maintain the same relationship with the 50%-delta volatilities existing on the volatility surface prior to the adjustment.

The invention therefore provides an interactive electronic trading system for options in financial instruments which enables users to trade options under controlled credit risk parameters and with mechanisms implemented which will maintain current pricing for option contract bids and offers. In one embodiment, the invention is directed to a system for dedicated network-based and web-based interactive trading of currency options. Users of the system may provide volatility runs of currency options (a volatility run is a set of prices expressed in terms of volatility for every standard tenor for a particular currency pair at a particular strike price), may deal on existing offers to sell or bids to buy, or may improve on existing offers to sell or bids to buy. The system of the invention may be set up so that trading is done in units of volatility for the option contract price, and after a transaction is completed, the system converts the volatility price into a monetary currency based contract price. Users of the system of the invention may include, but are not limited to, banks of all sizes and traders or dealers employed by banks or other financial institutions. Users of the system access the system through a workstation. Workstations include desktop, laptop, notebook and handheld computers, web consoles, thin clients, mobile telephones, pagers, personal digital assistants and any other means that allow users to enter or view displays of offer and bid information on option contracts. The system includes a system server, which may include one or more computers for managing network resources, managing network traffic and operating protocol. The system includes one or more communication links that receive and transmit communications between the users of the system and the system server, including communications to users that are parties to a completed currency option contract providing information concerning the completed contract. The communication between users and the system server may occur Through high bandwidth lines, such as ISDN lines, telephone lines, or wireless communications enabled by packet radio, spread spectrum, cellular technology, satellites and microwave towers.

According to another aspect of the present invention, there is provided a system for automatic price quotations for a requested option contract. The system includes users each having an internal volatility surface, and a protocol for polling the internal volatility surfaces for prices on the requested option contract. The lowest price is provided to the user requesting the option contract.

According to yet another aspect of the present invention, there is provided a method for providing automatic price quotations for a requested option contract. When a request for an option contract is received, the internal volatility surface of one or more users is polled to obtain prices for the requested option contract. The prices obtained from the poll are compared, and the lowest price is provided to the user requesting the option contract.

The inventive system for the automated trading of option contracts ensures trades are completed between creditworthy customers by categorising the users into discrete tiers. For example, users who are assigned to a first tier can perform nearly all of the transactions or functions available on the system. First tier users can make volatility runs, can improve offers to sell and bids to buy options or may deal on offers to sell and bids to buy options. Users in the second tier who deal in smaller volumes of option contracts than first tier users are more restricted in their use of the system. For example, they may only be permitted to improve offers to sell or bids to buy options or to deal on offers to sell or bids to buy options. Alternatively, there can be additional user tiers such as a third tier of users who are restricted only to dealing on offers to sell or bids to buy options.

As mentioned above, the system of the invention may further include a system for automatically withdrawing quotes for offers to sell or bids to buy options contracts after an expiration of a certain period of time defined by the user providing the quotes. The withdrawal of quotes is based on a protocol corresponding to a period of time defined by the user offering the option contract. The system for automatically withdrawing quotes may also permit automatic withdrawal of quotes upon a prescribed movement in the market value of the financial instrument underlying the option contract. The system includes a target value for automatic withdrawal of the financial instrument defined by the user and a protocol for comparing the defined value to the current market price. The system may further includes a protocol for withdrawing the user's quotes if the user's defined value for the financial instrument equals the current market price for the financial instrument.

According to a further aspect of the present invention, arbitrage avoidance is implemented by a method which includes the steps of receiving a notification that a user's internal volatility surface has changed, polling the user's internal volatility surface for prices of indicative option contracts having prices stored by the system, comparing the current prices stored by the system and providing a notification if the prices obtained from the internal volatility surface are arbitrageable against current prices stored by the system.

It is thus possible to provide an accessible electronic trading system that provides counterparties a means for assuring credit before a deal takes place while maintaining anonymity. Such a system also provides market makers with the means, for every price and every currency pair: to define the exact spot price that should result in either a bid or an offer becoming invalid, to automatically withdraw invalid prices, to define a time cut-off for each price, and to automatically withdraw prices at the defined time cut-off. The system also obviates, or at least mitigates, arbitrage on volatility surface trading.

At least one embodiment of the invention will now be described, by way of example only, with reference to the accompanying drawings, in which:
**Figure 1** shows a main screen for dealing At-The-Money (ATM) Straddles and Risk Reversal options for a given currency pair and provides prices for current live volatility runs;
**Figure 2** shows a screen that provides summary data for a particular option contract, including expiry date, delivery date, strike price and spot reference;
**Figure 3** shows a screen that provides detailed pricing and contract information for an option contract selected by the user. Details include option strategy, trade, spot, expiry and delivery dates, relevant dates, prices and the system-calculated "Greek" values (gamma, vega, spot delta and vanna) that apply to the contract;
**Figure 4** shows a screen that provides all of the prices in the market for a particular currency pair and tenor;
**Figure 5** shows a screen that displays all of the trades for a particular currency pair and tenor that occurred over the previous week;
**Figure 6** shows a screen used for entering, improving, or turning off bids and offers on specific tenors of ATM straddles;
**Figure 7** shows a screen that confirms certain bids or offers submitted by a user for particular option contracts have been turned off;
**Figure 8** shows a screen used to view and confirm new prices and corresponding currency face amounts on option contracts submitted to the system;
**Figure 9** shows a Run Entry screen, which allows users to enter prices for every standard tenor of an ATM straddle for a selected currency pair;
**Figure 10** shows a screen used to enter a time-out, lower spot-out, upper spot-out and default size applicable to validity of prices entered on the Run Entry screen of Figure 9;
**Figure 11** shows a screen for dealing (selling or buying) specific tenors of ATM straddles at the bid or offer price;
**Figure 12** shows a screen that identifies the counterparty to a trade and allows either party to display pricing details and to agree to the deal or to discuss details of the deal with the counterparty prior to agreement;
**Figure 13** shows a screen used to communicate with a counterparty after a request has been made to discuss the deal using an online "chat" facility;
**Figure 14** shows a trade blotter screen that displays information about all of the deals of a particular user;
**Figure 15** shows the screen of Figure 14, displaying totals by counterparty;
**Figure 16** shows the main screen for submitting specific-interests to the system;
**Figure 17** shows a screen for entering details on a request for a specific-interest option contract;
**Figure 18** shows a summary flow chart for trading specific-interests;
**Figure 19** shows a summary flow chart for trading 2-leg specific-interests;
**Figure 20** shows a version of the trade blotter screen available to users who need to download details of confirmed trades;
**Figure 21** shows a trade ticker screen which displays every trade which has been done in the system. As a trade is made, it is added to the top of this screen;
**Figure 22** shows a summary flow chart for the normal trade process (offer cycle);
**Figure 23** shows a summary flow chart for the normal trade process (acceptance cycle);
**Figure 24** shows a summary flow chart for the trade confirmation process;
**Figure 25** shows a summary flow chart for the trade negotiation process; and
**Figure 26** shows a summary flow chart for the void trade process.

The invention addresses the specific problems inherent in designing a network-based trading system that facilitates the trading of option contracts. This invention provides an automated system capable of handling trades of options in financial instruments, such as currency options, and their unique parameters and considerations. In one embodiment, the invention addresses the trading of currency options by and between banks.

The system of the invention supports standard option products with tenors, for example, up to 1 year and can accommodate products with longer tenors as well as non-standard options. The system of the invention allows users to trade both ATM options and specific-interests.

The system maintains a current database of volatility prices on option contracts and transmits them to all authorized system users. The system of the invention may poll system users, or poll one or more volatility surfaces maintained by system users, to obtain a list of volatility prices for a requested option contract, one for each bank or institution. In either case, for each option contract, the system shows the best price available along with the amounts of currency for which the best bid or offer applies. It also shows the second-best bid and if desired other less preferential bids and offers available if any. Typically, at no point prior to dealing are the identities of the users disclosed to other users.

Users may obtain from the system a price on any specific-interest option contract. Once the specific-interest is defined by the user, market maker users have the opportunity to make a market on the option.

The system may support trading in currency pairs including, but not limited to, the following currencies: EUR (Euro), USD (United States Dollar), JPY (Japanese Yen), GBP (British Pound), CHF (Swiss Franc), AUD (Australian Dollar), NZD (New Zealand Dollar), CAD (Canadian Dollar), SEK (Swedish Krona), NOK (Norwegian Krona) and GRD (Greek Drachma).

The invention also provides a way for a user to identify the counterparties with which it prefers to deal in terms of credit. The user of the system sees only the prices of counterparties with which the user may deal in terms of credit. These "credit filters" promote system efficiency by displaying only bids and offers on which the user may deal. Using an online credit input screen, or an automatic file upload, each user defines the counterparties with which it can deal by providing for each counterparty with which it will deal (1) the maximum tenor it can deal to and (2) the maximum size (or maximum value at risk, "VaR") of option it can deal for. The user may update these preferences as many times as it chooses. These preferences are stored in the system's computer database. The system operates a protocol whereby every time a new bid or offer is entered by a system user, the system consults the current user preferences in the database to determine which user screens should display the newly entered bid or offer.

The system of the invention can be managed so that it does not show to a user prices from a counterparty other than one with which the user can deal, nor will it show prices on an option that is of an inappropriate tenor or is too large. Each user sees only prices on which the user knows he can deal according to the data that the user has supplied to the system. If two institutions meet on a price displayed by the system, the deal will be deemed to be binding. At that point, the user cannot turn down a counterparty on grounds of credit. Thus, the system of the invention allows a great deal of flexibility to define credit filters and to see prices that are tradable, but requires in return that users take the burden of responsibility for credit decisions upon themselves.

Alternatively, the user may view the prices of all counterparties, regardless of whether the counterparties meet the user's credit requirements. The system may also be configured so that a user may view the prices of all counterparties, but will be able to discern by an on-screen indicator the prices which meet the user's credit requirements. An example of such an on-screen indicator is a specific colour for prices that do not meet the user's credit requirements.

A user may also directly deal with other users. Users can specify another user or set of users to contact for prices on a one-to-one basis. Users may choose a list of other users by name and/or institution.

Users may also request prices from other users anonymously, based on historical price-making performance ranking. A user may request a price on a given currency pair based on performance of a specified number of top users, based on the users' liquidity performance per currency pair and per tenor over a specified time period. For instance, for USD/JPY, User A may request prices from three users who have provided the best performance for the three month tenor, over the last month. Or, a user may request a price on a given currency pair based on performance of a specified number of top users, based on the percentage of time for which the users have provided the best price, over a specified period time.

The system of the invention also provides a means for automatic withdrawal of stale quotes. The system of the invention allows users to define a time cut-off for each offer or bid (a "timeout"), after which prices are automatically withdrawn. The system allows withdrawal of prices if there is more than a prescribed movement in the value of the underlying currency. The user may define a particular barrier spot rate price for each currency pair called a "spot-out." If the spot price of a currency pair reaches the spot-out defined by the user, the user's bids and offers for that currency pair are automatically withdrawn. These "time-out" and "spot-out" facilities allow market makers to be protected from stale prices and large market moves. The availability of these features should result in greater willingness to make prices and thus, greater liquidity throughout the system.

The system also provides priority rules for bids and offers. The system prioritises bids and offers according to two criteria: first, by the price level of the bid or offer; second (as to equal prices), by the time the bid or offer was submitted. These rules create greater transparency in the market than is currently available. The priority of bids and offers by price is displayed on the screen in that only the best current price, along with the second best price, is displayed for a particular option contract. The priority among users at the same price is not reflected on-screen except that when a user joins at a particular price level the additional volume will appear on-screen as an increase in the volume. A single volume is displayed for each price which represents the total of the individual volumes at that particular price.

New bids and offers are constantly being submitted, and as time passes and the spot market moves, bids and offers will time-out and spot-out. Accordingly, the price of each option changes continuously. Users see these changes virtually instantaneously, further increasing transparency in the market.

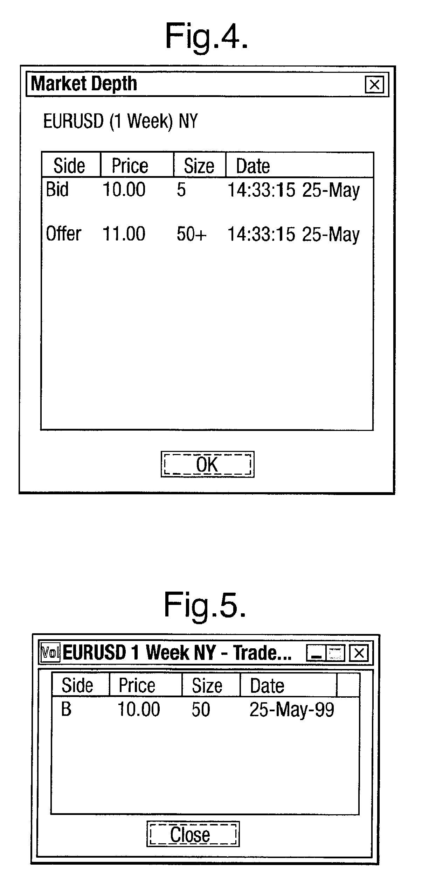

Transparency of the market is further increased by the system of the invention with a screen that indicates the depth of the market, shown in Figure 4. This screen gives the user the ability to view all pending bids and offers for any given currency pair and tenor as well as the amount available to trade at each price. The depth of market stack may be displayed best to worst bid/offer, with the user's position, if any, appearing in the queue in a different colour. Therefore, the depth of market screen allows a user to view, for instance, how many banks are potential dealers on a particular currency option, how much volume is available, and whether any bids or offers are out of line.

The system calculates the actual price from the volatility price of each contract in real-time and displays the actual price upon request. This feature is an improvement over current practice where price from volatility is calculated after the deal is done, and can be disputed if a user does not agree with the inputs that have been used for the calculation. In the system, the spot rate, forward rate and interest rate information that are required for the calculation of price are provided by live feeds from market standard information systems as well as from the users' own internal feeds. Preferably, these feeds may only be amended by mutual consent.

The system may also include a means to resolve disputes between counterparties. The system provides the ability to download the details of a deal once it has been confirmed. At this point, a support person of the system can mediate a dispute between the counterparties. Since all deal details are displayed to the user before it deals, such situations should rarely arise.

After all details of the deal are agreed upon, the deal is posted to the system database. Each user is able to see all the trades it has made and is given the opportunity to download the details locally. This electronic download saves a great deal of manual booking and ticket writing. The system also keeps a record of when users have made markets on specific-interests or have provided volatility runs, in order to assess to what extent these users fulfil any obligations they may have as market makers.

As an adjunct to the broker functions that the system provides, the system may also allow users that are price-takers to deal automatically either on volatility surfaces provided by users that are price-makers on the system or on the prices provided by price-makers when the volatility surfaces maintained by these users are polled by the system.

The system transmits prices to, and responses from, users via commercially available software packages. The system that supports the functionality described herein comprises a central computing unit, for example one or more servers (not shown) using the Windows™ NT or 2000 server operating system. A communications network is provided comprising a plurality of Points Of Presence (POPs) so that a plurality of terminals (not shown) is able to access the central computing unit. One or more of the plurality of terminals is located at a site of respective participant banks engaged in trading options contracts.

In the following examples, execution of applications providing the above-mentioned functionality is realised using thin-client technology known in the art. For example, the central computing unit runs thin-client server software and the terminals each run thin-client client software, such as provided by the Citrix^{®} Metaframe for Windows™ software package. Locally, information is handled by an operating system such as JAVA® (available from Sun Microsystems) or Windows®-based graphical user interface (available from Microsoft). Whilst, in the examples contained herein, the central computing unit predominantly provides the above-mentioned functionality, it should be appreciated that the processing workload can be distributed differently between the central computing unit and the plurality of servers. Contract details may be entered and options details are calculated using a pricing screen, which calculates deal details of currency options.

**Access and Security.** Each client organisation may have several log-ins to the system. Most users will have their own log-ins and customise their screens to suit their particular roles. A separate log-in can be provided to the credit department to allow users to upload the credit file. Each access is password protected.

The heaviest users of the system can be provided with dedicated high bandwidth lines, such as ISDN lines, for direct access to the system, while lighter users may access the system through a standard Internet access or telephone line. The system may also be designed to run on networks other than the Internet, such as dedicated user networks.

The security of the system is assured by basing it on a secure server with a hot backup. For example, 128-bit RSA, public key-based encryption system may be used for all transmissions.

**Management Information.** The system collects data on deals done and number of markets made. Collection of data on deals done allows reports to be prepared to show each user what market share it has and provides the input to the brokerage billing process. The system of the invention collects data on the number of markets that each user has made, and the proportion of time that volatility runs have been kept live in order to assess the user's performance relative to its market-making obligations.

**Tiers of Users.** In order to promote liquidity and to cater to the differing needs of different types and sizes of users, each user may be placed or "tiered" in two or more tiers. Each tier has different access capabilities, trading capabilities and fees. In one embodiment of the system of the invention, the users are tiered in one of three tiers. It should, however, be appreciated that the users need not be placed in tiers.

**First Tier.** In a currency option trading system, the users in the first tier are the major currency option market makers. These users provide volatility runs and volatility surfaces, make markets on specific-interests, ask for specific-interests, and are able to provide improvements to existing prices. When trading through the system, first tier users pay one rate of brokerage (lower than the current market average) for regular deals. The first tier users pay another, even lower rate, if they deal on an option where they previously have made a market on the system. For example, if, a user made a market on the system in one month EUR/USD straddles as part of its volatility run for that currency, and subsequently hit a bid that was put inside its price, the user would pay the reduced level of brokerage. The pricing system is intended to encourage the provision of prices. If, on the other hand, a first tier user does not fulfil its market making obligations, it faces penalties, such as increased brokerage rates or withdrawal of its market making privileges. First tier users are required to provide volatility runs to ensure adequate market coverage by the system. The provision of volatility surfaces, unlike the provision of volatility runs, is entirely voluntary.

**Second Tier.** The second tier comprises the bulk of the users classified according to credit rating. They can make volatility runs, improve existing prices and ask for specific-interests, but they cannot make markets on specific-interests. They pay a flat rate of brokerage on all deals. This rate may be significantly lower than current market prices but higher than that for first tier users. They are also permitted to use the autodealing function of the invention, as described above. In addition, they are able to use the autodealing function of the invention for deals under a certain threshold in terms of size in certain liquid currency pairs. For second and third tier users, the system provides an autodealing price on their specific-interest from the lowest bid and highest offer that result from the system's poll of the volatility surfaces maintained by first tier users, or alternatively, from the volatility surfaces created by the system from the volatility surfaces provided by the first tier users.

**Third Tier.** Third tier users are typically small regional users dealing in small size option contracts. They do not make any markets or improve existing prices. They are, however, able to ask for specific-interests.

An example of the tiering functions and capabilities of a currency trading system is summarized in the following table:

**Table I**

| Tier | Provide Bids/Offers For Volatility Surfaces? | Provide Volatility Runs? | Ask Specifics? | Make Specifics? | Improve Prices? | Autopricing Surface Price Takers | Brokerage Rate | Penalty For Not Meeting Obligations |
|---|---|---|---|---|---|---|---|---|
| First | Yes | Yes | Yes | Yes | Yes | No | Flat rate | Increased brokerage rate; lose market making privileges |
| Second | No | Yes | Yes | No | Yes | Yes | Flat rate | None |
| Third | No | No | Yes | No | No | Yes | Flat rate | None |

**The Two Tier Configuration.** The system can be configured to include two tiers of users: price-makers and price-takers. The first tier in the two tier configuration corresponds to the first tier of the three tier configuration, i.e. market makers who provide volatility runs and volatility surfaces and who make specific interests. The second tier in the two tier system is a hybrid of the second tier and the third tier in the three tier system. The second tier user in the two tier configuration can be a price-maker on volatility runs, it can ask for specific interests and be an autopricing surface price taker. The tiered functions and capabilities of a two tier currency trading system is summarized in Table II:

**Table II**

| Tier | Provide Bids/Offers For Volatility Surfaces? | Provide Volatility Runs? | Ask Specifics? | Make Specifics? | Improve Prices? | Autopricing Surface Price Takers | Brokerage Rate | Penalty For Not Meeting Obligations |
|---|---|---|---|---|---|---|---|---|
| First | Yes | Yes | Yes | Yes | Yes | No | Flat rate | Increased brokerage rate; lose market making privileges |
| Second | No | Yes | Yes | No | Yes | Yes | Flat rate | None |

**Autodealing on Volatility Surfaces.** The system of the invention also provides a means for eliminating arbitrage, which occurs upon trading on internal volatility surfaces, by providing computerized autodealing on composite prices derived from many different internal volatility surfaces.

Autodealing occurs by a poll of first tier users. For each autodealing price needed, the system polls a computer of each first tier user, and each first tier user's computer provides a price for the option sought. The price provided by each first tier user is based upon a price derived internally by the first tier user, usually (but not essentially), by interpolation of a volatility surface created by the first tier user according to the interpolation rules of that user. In this example, a storage unit, such as a storage unit of the central computing unit, stores the prices obtained from each first tier user. Of course, where no tier hierarchy exists, the prices obtained from all terminals polled are stored. The system of the invention provides, in this example by means of a communications unit, such as a process, supported by the central computing unit, the best and, optionally, second best prices to the user who requested the price. In this example, the best prices are a highest bid to buy the option contract and a lowest bid to sell the option contract, the highest bid to buy and the lowest bid to sell defining a first range of values. A calculation unit, in this example a processes, supported by the central computing unit identifies the highest bid to sell the option contract and the lowest bid to sell the option contract.

Preferably, market-making users maintain a volatility surface that can be used to specify the volatility used for options expiring on every business day in the next year and for every delta from 5% to 95%. Each market-making user has a volatility request mechanism on a web or network server on the user's premises. The system of the invention has an Application Program Interface (API) that resides on the user's web or network server. The API defines the formats for requests from and prices to the system of the invention. Prices may be generated dynamically to avoid holding the complete surface in memory.

Using the system, surface price takers can ask for an anonymous surface price. Once a deal is executed in this method, it can still be declined due to credit. To assure they won't be declined due to credit, surface price takers can identify themselves when requesting a surface price. The system of the invention will display the best price given credit availability. Once executed using this method, the deal cannot be declined on credit.

If there is an arbitrage between two prices returned by the first tier users, the bid/offer spread cross, causing a large potential loss to the market maker bank who has unknowingly crossed over the bid/offer spread, the system of the invention eliminates the arbitrage by allowing the user to trade on only one side of the price. Consequently, if one of the plurality of terminals submits an associated bid to buy and an associated offer to sell, defining a second range, and the second range does not mathematically overlap the first range, an arbitrage identification unit, such as a process, identifies this lack of overlap.

The system of the invention also has a feature to avoid arbitrage with prices held by the system. Each time a first tier user changes its internal volatility surface, the first tier user informs the system of the invention of the change. The system then polls the first tier user's computer for prices of certain indicative options. The indicative options may include, for example, 10% and 25% delta puts and calls and at-the-money forward straddles for all of the tenors (1 month, 2 months, etc.). The prices of the indicative options are compared to the highest bid and lowest offer for each of the indicative options currently held by the system. The first tier user that is contributing the prices for the indicative options will be notified by the system if the prices contributed are arbitrageable against the highest bids and lowest offers stored by the system. With this information, the first tier user may alter its volatility surface to correct for the arbitrage. If the arbitrage is not eliminated by the first tier user, the system will eliminate the arbitrage by only allowing users to trade on one side of the price.

Autodealing may also occur using a volatility surface created by the system of the invention. First tier users contribute data for a volatility surface for each currency pair that they have committed to make markets for. The system of the invention accepts these surfaces in a pre-specified format from users and then uses these multiple surfaces to provide a composite price to give to a surface price taker. The "pre-specified format" will be a very fine grid of deltas and tenors, i.e. with a large number of data points (defined option volatilities) making up the surfaces. The reason for requesting a finely defined grid is to avoid the need to perform interpolations from a coarse grid in the system of the invention itself. Users' interpolation rules, though broadly similar, vary sufficiently to cause economically significant differences in volatilities for interpolated options even where the defined option volatilities are identical. The system of the invention greatly reduces the effect of varied interpolation rules because the finer the grid, the smaller the differences are. These surfaces will specify the volatility to be used for options expiring on every business day in the next year and for every delta, in 5% increments, from 5% to 95%. First tier banks also quote a bid/offer spread (in terms of basis points) that the system uses to create two-way prices around these mid-market volatility levels. These users provide the surfaces to the system of the invention in the form of an uploaded file.

The updating of information on users' volatility surfaces allows the system to keep the values consistent with the way currency options are currently trading. Updating occurs in two stages. First, the 50%-delta volatilities on the surface are updated to be consistent with the currently tradable volatility run. Then, the off-the-run volatilities for options whose deltas are not 50% are adjusted to maintain the same relationship with the 50%-deltas as was specified in the original uploaded surface. This updating feature provides an advantage over volatility surface trading systems implemented individually by large users because in the system of the invention stale prices are not quoted from the volatility surfaces as the volatility market moves.

**Example 1:** An example of a straddle (a simultaneous purchase of a put option and a call option on the same currency pair with the same tenor and strike rate), struck at-the-money-forward (ATMF, meaning that the exercise price is same as the current market price of the underlying transaction at the same maturity) for a standard tenor (for example, expiring in one month's time) traded according to the method of the invention is as follows.

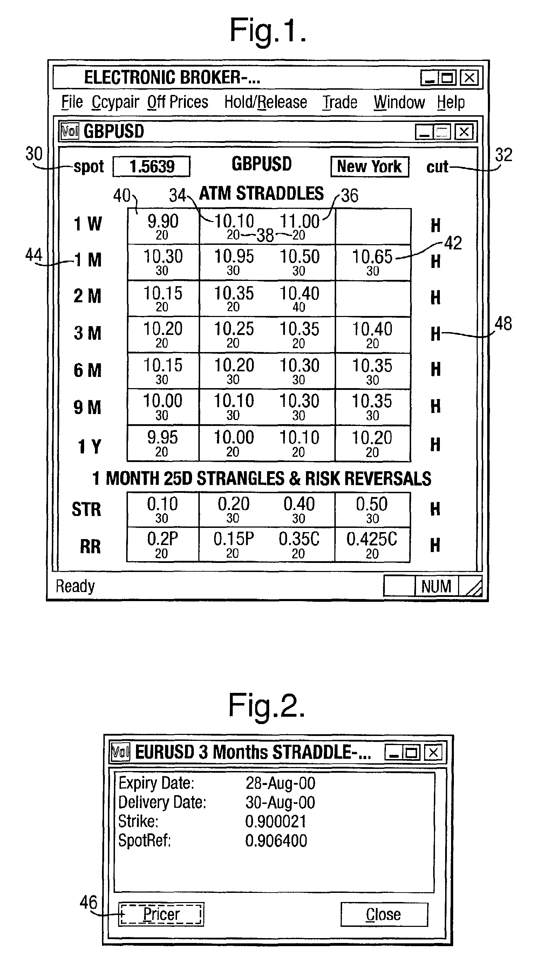

**Input Screen.** Referring to Figure 1, using the thin-client software a screen for dealing ATMF straddles is presented to one or more user at respective terminals capable of communicating with the central computing unit. The screen provides the current live volatility runs for the GBP/USD currency pair. This screen could also be configured to show the current live volatility runs of more than one currency pair. Each user's desk may customise which currency pair or pairs that appear on the screen. For each currency pair, prices are shown for all of the standard tenors (for ATMF straddles) as well as for one month 25% delta strangles (a combination of a put and a call in the same currency pair expiring the same day, where the put and call have different strike prices) and risk reversals (the simultaneous sale and purchase of both a call and a put with the same expiration month and with different strike prices or with the same strike prices and different expiration months).

The screen of Figure 1 shows the prices for GBP/USD contracts. The "spot" 30 is located on the upper left hand corner and indicates the current spot price for the currency pair from which all contract details will be calculated. The user can also see what cut-off convention (either the "New York Cut" with options expiring at 10 a.m. New York time, or the "Tokyo Cut" with options expiring at 3 p.m. Tokyo time) applies to each bid or offer. The cut-off convention abbreviated "cut" 32 is located on the upper right hand corner of the screen. The price of the one-week (indicated by 1 W on Figure 1) contract is shown by the following data. The best bid 34 and the best offer 36 are shown in the centre as 10.10 and 11.00, respectively. The 10.10 offer 36 is shown in a particular colour, for example red, because this offer has been placed by the user of the system. A user that has not placed this offer would see this number in a different colour, for example blue. The amount of currency that the price is good for is shown by the smaller numbers 38 underneath the bid and offer. In the one-week contract, the small number 20 indicates that options on 20 million GBP are being bid and offered (according to market convention, 20 million GBP in the context of an ATMF straddle means 10 million GBP are call options and 10 million GBP are put options). The smaller numbers on left and the right of the best bid and offer show the second best bid 40 and second best offer 42, if any, and the corresponding amount of currency that can be traded on them. In this embodiment, only those bids and offers provided by counterparties with which the user has specified that it can deal from a credit viewpoint are displayed.

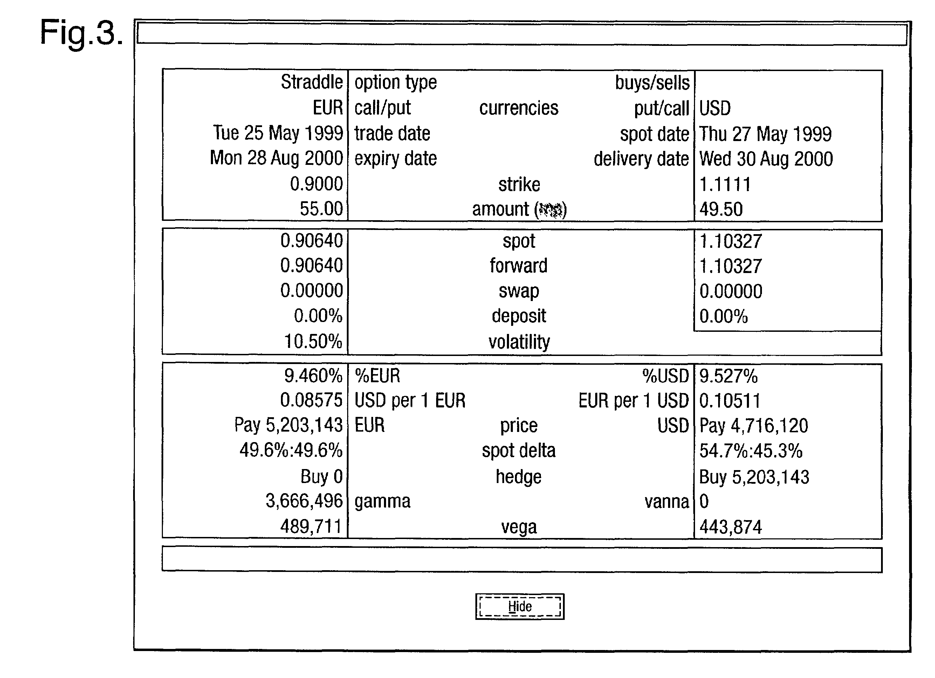

From this screen (Figure 1), a user can access additional useful information. If the user clicks to the left of the contract price, on the tenor period 44 (e.g., 1M), the central computing unitprovides, via the terminal currently being used, a screen showing the current details of the trade for that tenor. Figure 2 shows an example of this screen for a 3M EUR/USD contract. The screen of Figure 2 provides information on expiry date, delivery date, strike price and spot price. When the user clicks on the "Pricer" button 46 of the screen of Figure 2, additional information about the option contract, such as price in monetary terms, spot to delta ratio, hedge, gamma, vega, and vanna appears in an additional screen, shown in Figure 3.

When the user clicks on a price in the middle columns of Figure 1, a screen that provides depth of market appears, as shown in Figure 4. This screen shows all of the prices in the market for that tenor. The depth of market stack is displayed best to worst bid/offer, and the user's position, if any, is indicated by appearing in a different colour.

The user may also view the transaction history of a particular tenor from the screen of Figure 1. The user clicks on the "H" 48 located to the right of the prices for a particular tenor, and a transaction history screen for the tenor appears, as shown in Figure 5. The transaction history screen shows the trades that have been done for that tenor over the last week.

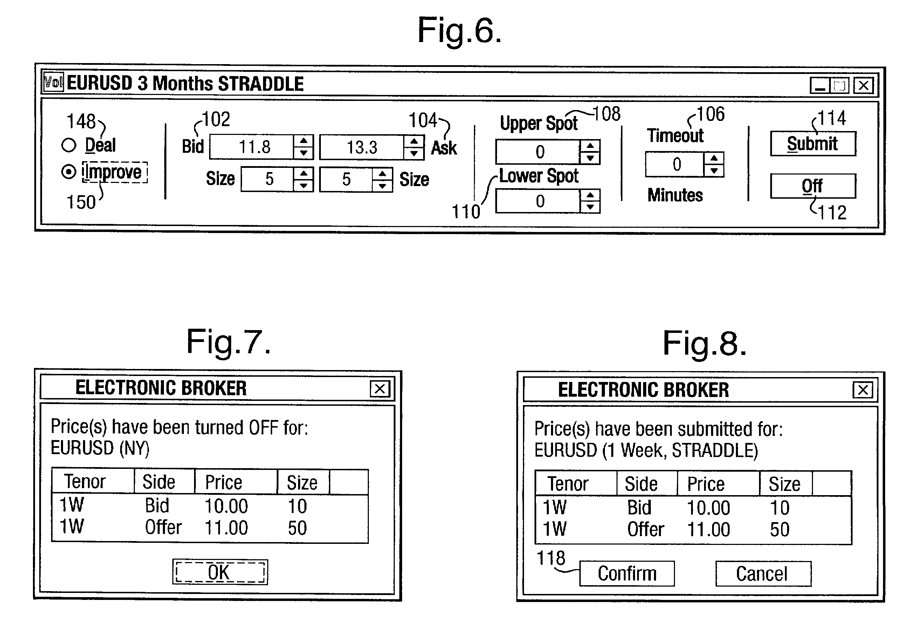

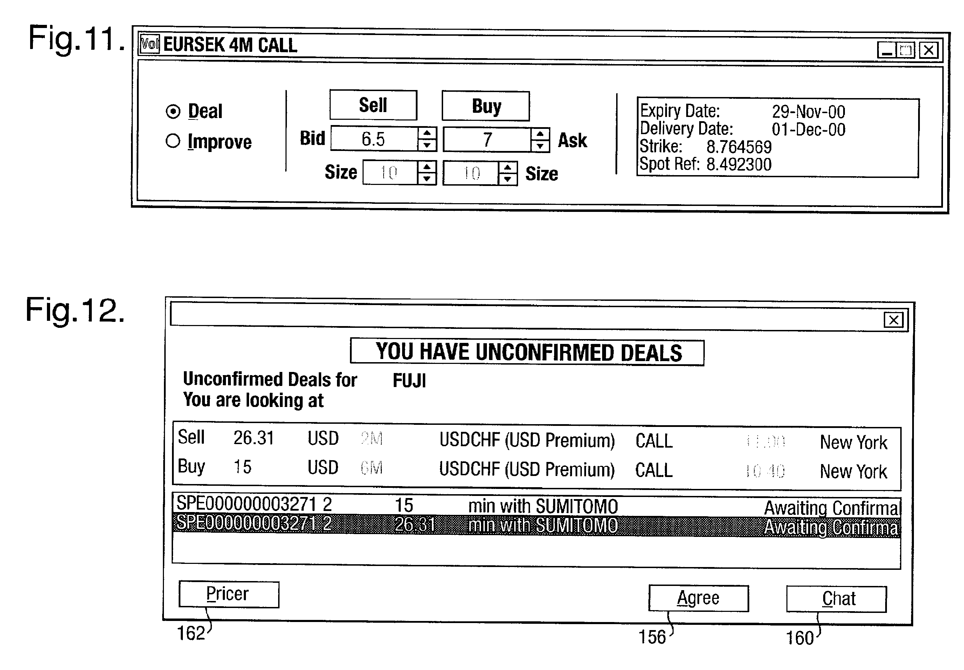

**Improving or Joining Prices.** The user can act on the price displayed on the screen of Figure 1 by double-clicking on the price itself, which allows the user either to improve the price or to deal. If the user chooses to improve the price of, for example, the USD/JPY one-month, the screen will appear as shown in Figure 6. Versions of the screen of Figure 6 customised to specific options strategies, such as Straddles and Risk Reversals and are also available in Deal mode (see Figure 11). This embodiment includes entry/display fields for bid and ask price, face amount, as well as upper, lower and time-out limits for the price.

The user can input its own bid or offer for a particular amount of currency from the screen shown in Figure 6. In this example, the user is submitting a bid 102 of 11.8 on 5 million USD and an offer 104 (denoted "Ask" in Figure 6) of 13.3 on 5 million USD. From the screen shown in Figure 6, the user may improve its own prices as well. In addition to specifying the level and the size of bids and offers, the user may specify a time-out, e.g. how long the price is good for. The user specifies a time-out by entering the time in minutes that the submitted price is good for beneath "Timeout" 106 on the screen of Figure 6. The user may also specify a spot-out, the value of spot that is the trigger for cancelling the bid or offer. The user specifies an upper spot 108 and a lower spot 110 on the screen of Figure 6. If the spot price moves outside of or equal to these limits, the submitted price will be taken off.

If the user chooses the "Off' button 112, a previously submitted price for that tenor will be removed. When the "Off" button is selected, the screen of Figure 7 appears to confirm that a particular price is turned off

If the user chooses "Submit" 114 on the screen of Figure 6, the user must confirm its prices. When the user clicks on the "Submit" button of Figure 6, the screen of Figure 8 will appear. The user selects "Confirm" 116 on the screen of Figure 8 to confirm its prices.

Once the user submits and confirms its bid and/or offer, the system of the invention transmits the new price to all users. If the user has joined the bid i.e., has submitted a bid that is equal to the current best bid, the system of the invention transmits the same price as before but with an improved size on the bid. If the user has joined the bid and another user trades at this bid, the user's bid will not be filled until the bids that were submitted before its bid are filled according to priority rules.

Users can submit entire volatility runs to the system. The system provides a Run Entry Screen for inputting such volatility runs. A trader can enter individual prices into the system for every contract in the run. Alternatively, by using the Run Entry Screen, the trader can default every price to the current best price for that particular option in the system. By clicking on a particular entry, the trader can either join the market default price or change the price to a desired entry other than the default price. The Run Entry Screen also permits a trader to set a default size, a time-out, a lower spot limit and upper spot limit for all entries in a run.

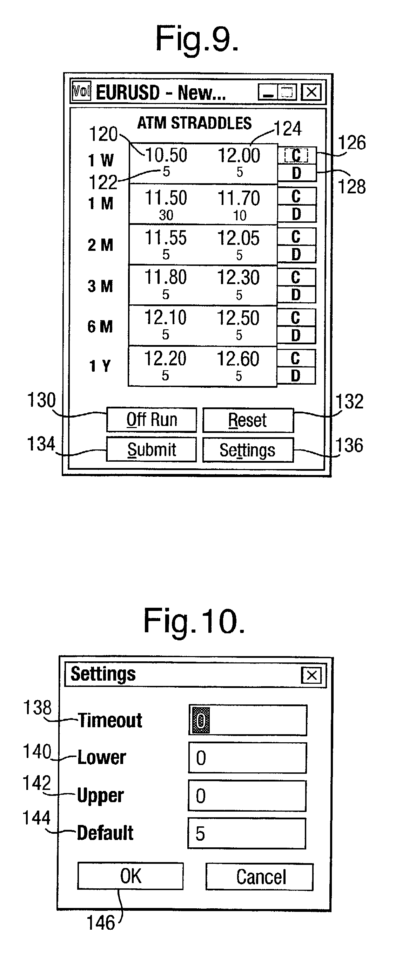

Figure 9 shows an example of a Run Entry Screen for a Euro/US Dollar currency pair for at-the-money (ATM) straddles for each bid and offer of a tenor. The screen displays a bid 120 on the left with a corresponding size 122 represented by the smaller number below the bid. Similarly, the number to the right is an offer 124 with a corresponding size represented by the smaller number below the offer. To the right of each bid and offer is a button marked "C" 126 and a button marked "D" 128. A trader who clicks on "C" 126 will clear the price and size for that tenor. Clicking on "D" 128 puts the default size for the run. At the bottom of the Run Entry Screen, there are four larger buttons entitled "Off Run" 130, "Reset" 132, "Submit" 134 and "Settings" 136. Selecting the "Off Run" 130 button removes all previously submitted prices for the currency pair. Selecting the "Reset" 132 button clears all displayed prices and sizes in the dialog. Selecting the "Submit" 134 button submits all displayed prices and makes the prices available and visible to other users in the system.

By selecting "Settings" 136, the user accesses another display, an example of which is shown as Figure 10. In this display, a user can set a time-out 138, a lower spot limit 140 and an upper spot limit 142, as well as a default size 144 for the run. After inputting these settings, the user can save the settings as applying to the volatility run by selecting "OK" 146.

To prevent arbitrage, if the user submits a run that includes a bid or an offer that crosses the bid-offer spread of any contract currently in the system, the system notifies the user. The user is prompted by the system to confirm that it wishes to enter the bid or offer even though it crosses the spread.

If the user joins the bid/offer, (i.e. submits a bid/offer that is equal to a current bid/offer), the system will transmit the same price as before but with a combined, or "stacked," size on the bid/offer. For stacked prices, trades will be done on a first-in-first-out basis, i.e. the full amount of the first price at the level will be executed before any of the second or subsequent stacked prices are executed. These prices are displayed in an agreed colour if the user is a part of the stacked price; otherwise they will appear in another agreed colour.

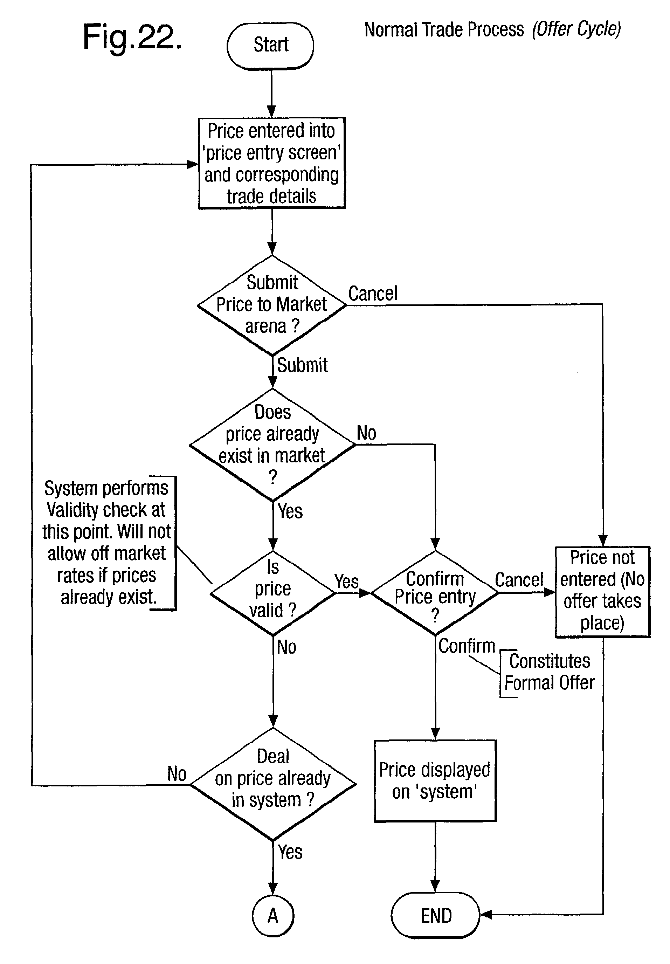

A summary flowchart of the process for submitting a price to the system is shown in Figure 22.

**Dealing On Prices.** A user can deal on a price by double-clicking on the bid 34 or the offer 36 on the screen of Figure 1, and choosing to "deal" 148 rather than "improve" 150 on the screen of Figure 6. When the user chooses to deal 148, the screen appears as shown in Figure 11. This screen allows the user to sell at the quoted size and price or to buy at the quoted size and price. The system of the invention does not permit the user to deal on prices the user itself submitted (the user is not likely to attempt to trade on these prices since they appear in a different colour indicating to the user that it submitted the prices). The user clicks on the "Sell" 152 button to accept the bid or on the "Buy" 154 button to accept the offer. Once the user clicks the Buy 154 or Sell 152 button, the system shows the user the names of the counterparty (or counterparties) with whom the user has dealt and the details of the trade, as shown in Figure 12. The user can either "Agree" 156 to the deal or "Chat" 160 about the terms of the deal by clicking on the appropriate button in the bottom right hand corner of the screen shown in Figure 12. Additionally, the user may click on the "Pricer" 162 button in the bottom left hand corner of the screen of Figure 12 to obtain a display of contract details. This display is shown in the screen of Figure 3. If no action is taken after 30 seconds, the deal is automatically confirmed. The time remaining for taking action 164 is shown in the upper right hand corner of the screen of Figure 12.

If the user agrees with the details (which are the same details shown to the user before dealing) the user presses the "Agree" 156 button. Once the counterparty or counterparties have also agreed, the deal will be posted to the deal database. To prevent build-up of deal backlogs, the deal is completed automatically three minutes after the user has pressed the "Agree" 156 button with no response from the counterparty.

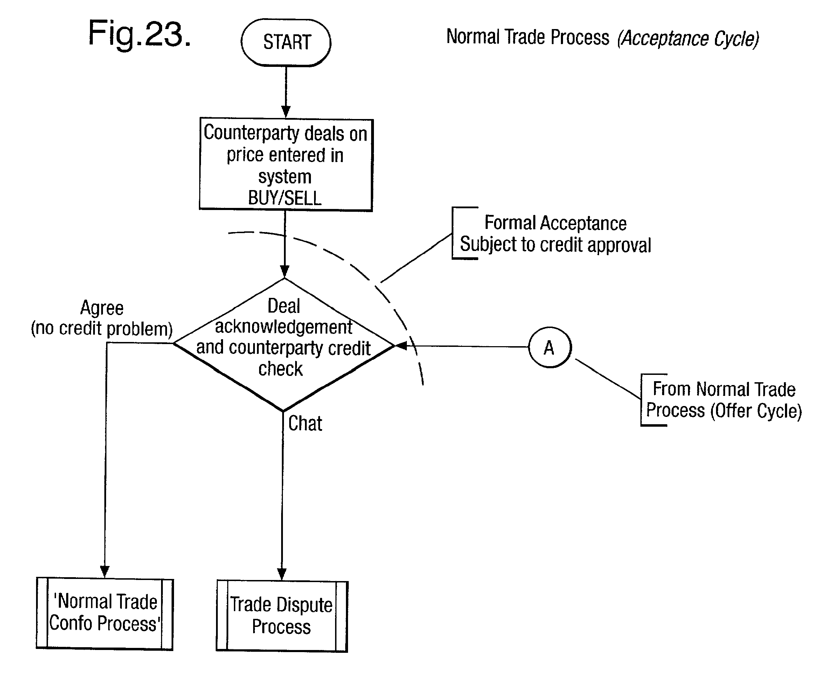

A summary flowchart of the process for dealing on a price is shown in Figure 23.

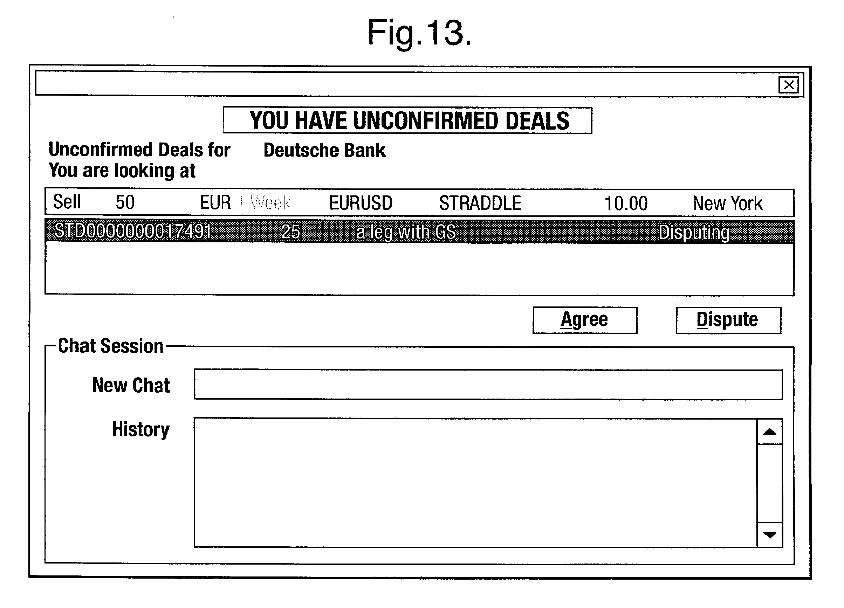

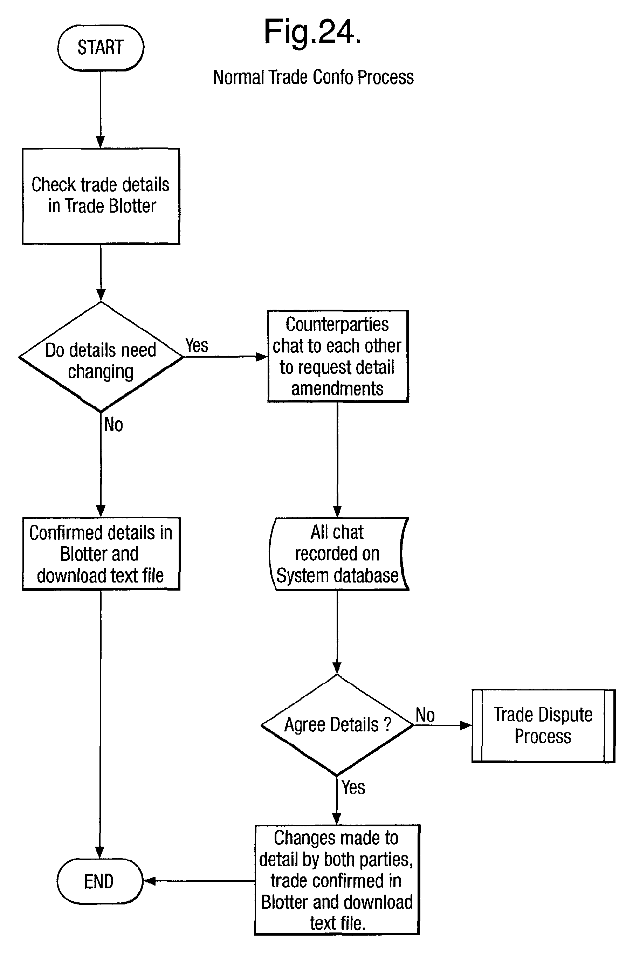

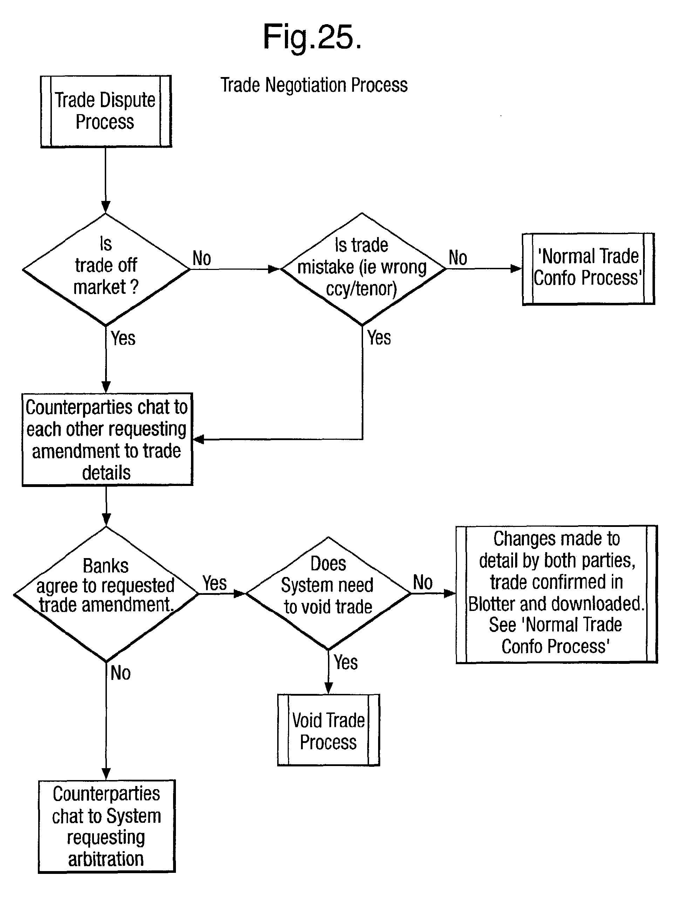

If a counterparty disagrees with the deal details, the party can contact a member of the system's support team who will mediate between the two parties to reach an agreement. This is achieved using the system's online chat facility, a one-to-one Internet communication channel, or the phone. The online chat facility, which allows the user to hold an online conversation with the relevant counterparty, appears as shown in Figure 13. A summary flowchart of this mediation process is shown in Figure 24. A summary flowchart of the trade negotiation process is shown in Figure 25.

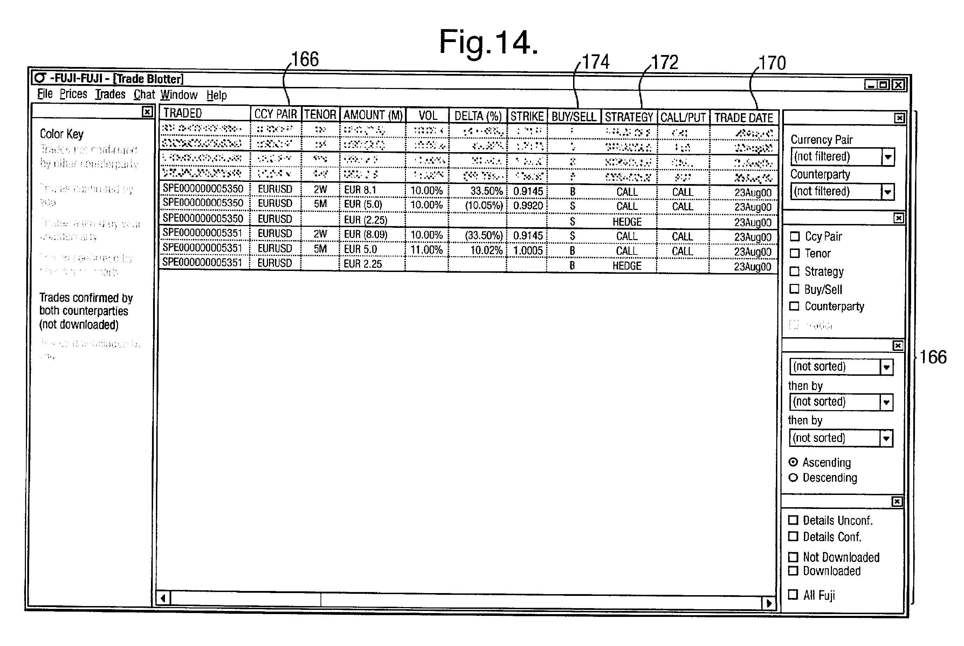

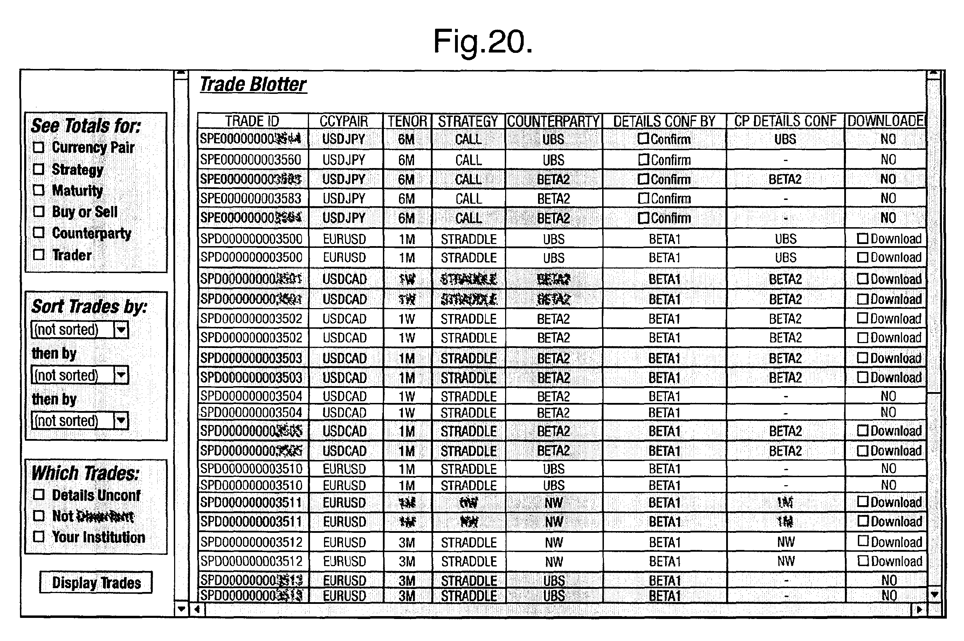

**Viewing Deals.** Once deals are done, a user can see all of its deals in an on-line blotter, as shown in Figure 14. The trade blotter screen of Figure 14 offers extensive filter capabilities, as well as the ability to recalculate, confirm and reject changes to trades. Another embodiment of this screen is available to users who need to download details of confirmed trades, shown in Figure 20.

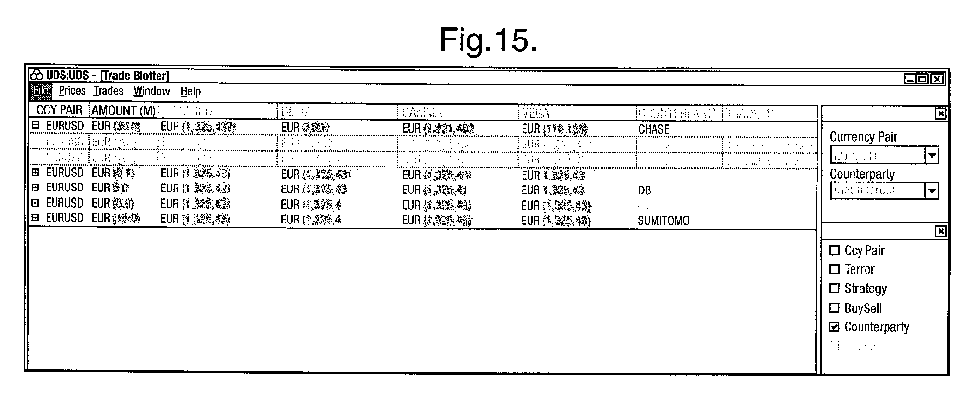

The trade blotter screen of Figure 14 can be downloaded electronically into the user's risk management system. A filter panel 166 is displayed on the right hand side of the screen. Information on the blotter may be filtered by the user so that the user may select to see totals of, for example, currency pair' maturity, strategy, buy or sell, counterparty or trader. Figure 15 shows an example of the on-line blotter screen of Figure 14 with totals by counterparty shown. Additionally, the user can sort records on values shown in the columns "Currency Pair" 168, "Trade Date" 170, "Strategy" 172, "Buy or Sell" 174, "Counterparty" and "Trader." The user can sort columns by selecting the desired sort options on the filter panel 166 of the screen of Figure 14, or by clicking on the column header to sort by values in that column. Furthermore, the user can selectively filter records for one or more of the following categories: "Details unconfirmed," "Not Downloaded" or "All for the user's banks" by selecting these categories on the filter panel 166. The deal details may be downloaded to the user's own computer either manually by the user or automatically, with the user's computer polling the system of the invention to identify and download all new deals, with user-chosen frequency, or automatically with the system of the invention alerting the user's web or network server that deals are waiting. The user's web or network server can then request download of any deals. This blotter facility represents a substantial time and effort saving compared to the manual transfer of deal information that is currently in use by voice-brokers.

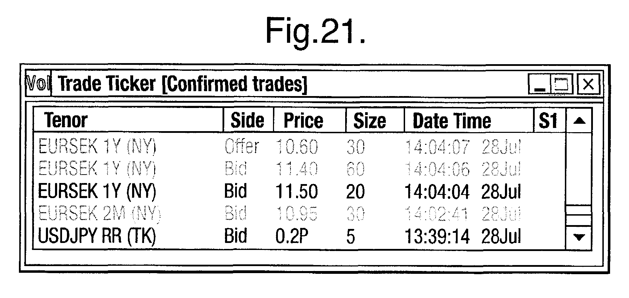

A trade ticker screen, shown in Figure 21, is also available. This screen displays every trade that has been made on the system. As a trade is made, it is added to the top of this screen.

### Example 2

Most of the mechanics of dealing specific-interest options are very similar to those of dealing ATM options. However, some aspects of dealing are particular to specific-interests.

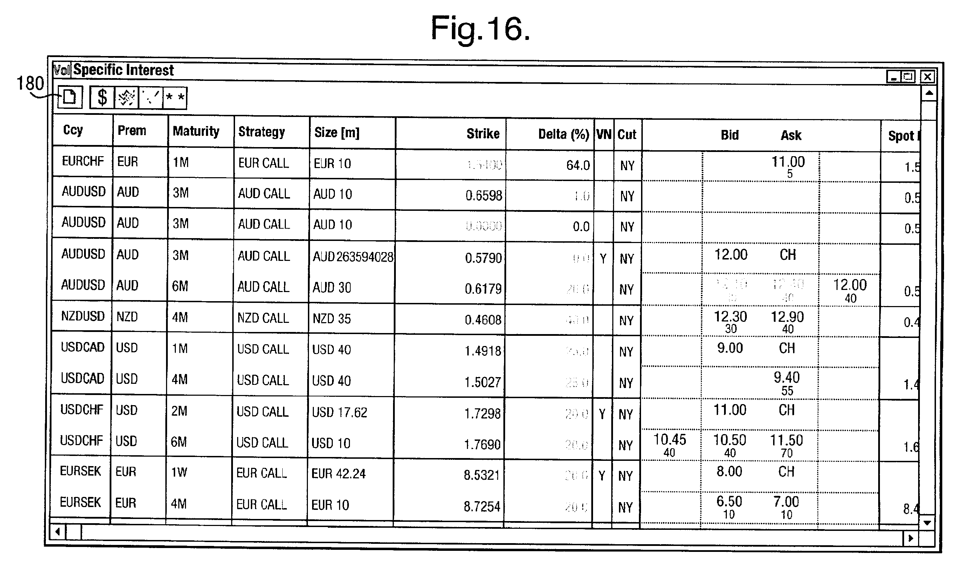

**Requesting a Specific-Interest.** Figure 16 shows the second of the two main screens of the system of the invention. Figure 16 is the main display screen for dealing specific-interest options. From this screen the user can enter an interest, which may be a standard strategy or a two-leg combination of strategies. There is no restriction on currency pairs for either strikes or delta trades. Thus, a currency spread, for example, would be specified as a straddle in one currency pair and a spread with a straddle in another currency pair.

The screen of Figure 16 can be filtered to show options in one particular currency pair, options to which a user has contributed a price, or specific-interest options sought by the user. Each option has a series of fields that describe it and series of fields that show the price. The pricing fields have the same convention as the ATM options previously described in Example 1. A particular background colour, for example yellow, on the pricing fields indicates that the specific interest shown was requested by the user.

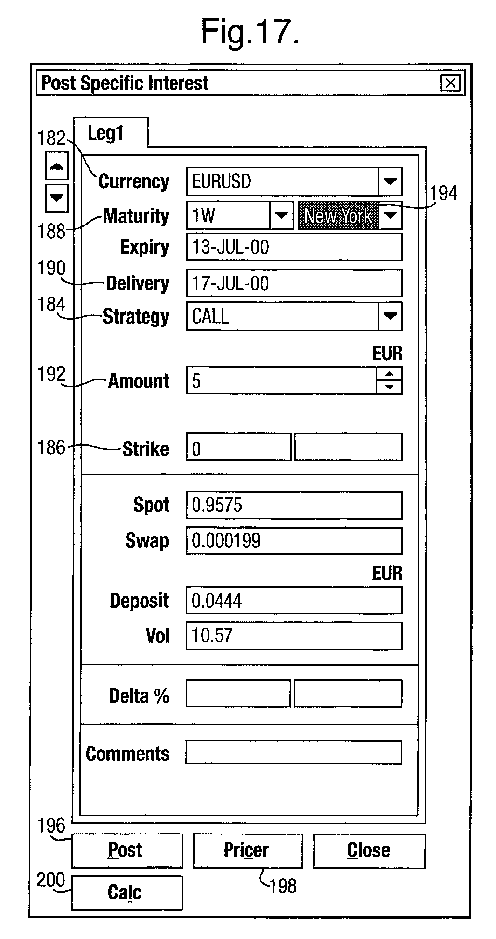

A user requests a specific interest by clicking the "New" 180 button on the specific interest screen. This displays the Post Specific-Interest Screen, shown in Figure 17. The user inputs its request for a specific-interest option on this screen. A specific-interest may be any standard strategy or a spread between two standard strategies. A standard strategy is one of the following: puts; calls; straddles; strangles (a combination of a put and a call in the same currency pair expiring on the same day, where the put and call have different strike prices); and risk reversals (a simultaneous sale and purchase of both a call and a put with the same expiration month and with different strike prices or with different expiration months and the same strike price). Thus, a currency spread, for example, could be specified as a straddle in one currency pair spread with a straddle in another currency pair. The screen of Figure 17 also allows the user to input up to a two-leg combination interest.

The details of the specific-interest to be entered by the user include the currency pair 182, strategy 184 (put or call), strike 186, maturity 188, delivery date 190, amount 192 and cut-off convention 194. In the case of spreads, the user may specify an amount on one strategy and a vega-neutral amount on the other. As would be appreciated by those skilled in the art, vega is a measure of the degree to which an option is sensitive to movements in the market level of volatility. When dealing on an option spread where one option is bought and one option is sold, then it is possible by defining a different amount of currency for the two options to avoid vega exposure to the spread taken as a whole. The vega from one option offsets the vega from the other. The system calculates the correct size for the second strategy to achieve vega-neutrality.

The screen of Figure 17 displays several buttons at the bottom of the screen, including Post 196, Pricer 198 and Calc 200. The Pricer 198 button displays a screen providing details regarding the option contract (shown in Figure 3) when selected. The Calc 200 button calculates the delta if a strike is entered and the strike if a delta is entered. The Post 196 button submits the specific-interest.

**Market-Making for Specific-Interests.** Once the request for a specific-interest is submitted, the system provides the request to all first tier users. First tier users choose whether or not to make a market; however, a failure to do so would mean that the deal would not count towards the fulfilment of the user's market making obligations, if any.

The screen shown in Figure 16 is used by the market makers to deal on specific-interests. If a market maker has supplied a volatility surface for the currency pair, the system suggests a rate based on that surface. In another embodiment the system suggests a price based on a poll of first tier users. The system will show a price input screen (Figure 6, the same input screen shown in the description of ATMF straddles). Any price that is made for specific-interests may have spot-out and time-out limits applied in the same way as for ATMF straddles.

**Dealing on Specific-Interests.** Once the first price is made, the Interest and the first tier market makers can see the price. At this point the Interest may choose to buy or sell or to improve one side of the price. The first tier market makers who did not provide the price may improve the price but cannot yet deal on it. Once the Interest has acted in any way (or once sufficient time passes if the Interest does nothing) the option is "cleared" and released to every user of the system to improve, or deal on, the price.

Improving and dealing on the price of specific-interests is handled in exactly the same way as for ATMF straddles.

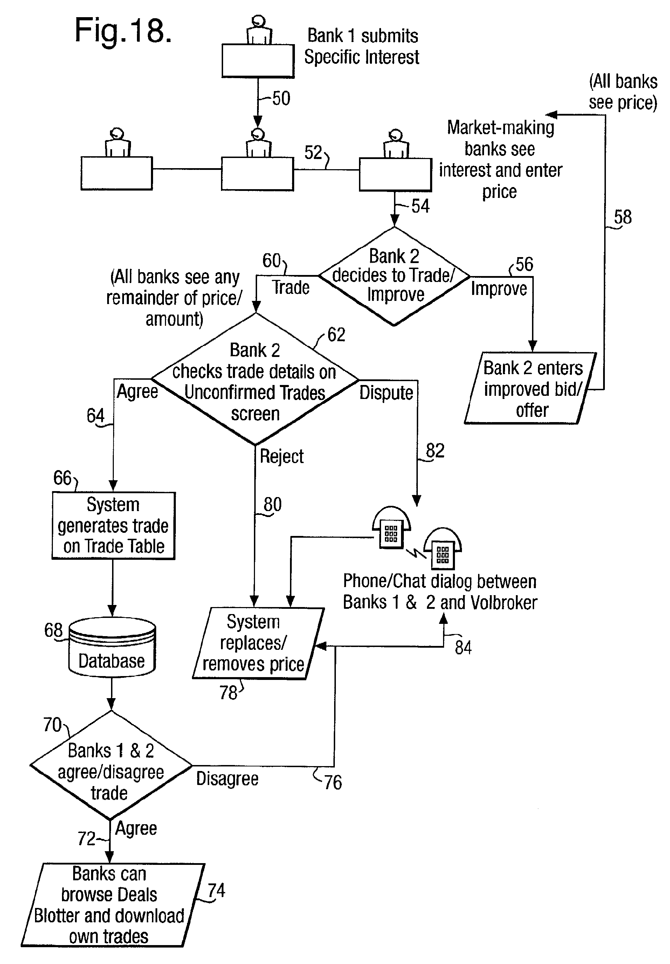

Figure 18 shows a summary flow chart for trading specific interests. Bank 1 submits a specific-interest at step 50. Market-making banks see the specific-interest and enter prices at step 52. All banks see the prices entered. Bank 2 decides to either trade or improve on the price at step 54.

If Bank 2 decides to improve on the price, Bank 2 enters an improved bid and/or offer at step 56. All banks see the improved price (step 58), and can choose to either trade or improve the price.

If Bank 2 decides to trade, all banks will see any remainder of price and amount that Bank 2 did not choose to trade at step 60. When Bank 2 selects trade, it may view details of the deal on the Unconfirmed Trade Screen at step 62. Upon viewing the Unconfirmed Trade Screen (shown in Figure 12), Bank 2 may choose to Agree, Reject or Dispute the deal.

If Bank 2 selects Agree, the system of the invention generates a trade on the trade table at step 66. If the counterparties agree to deal with one another at step 70, the deal is confirmed and appears on their respective deal blotters at step 74. If the counterparties do not agree to the trade, the system of the invention replaces or removes the price at step 78.

If Bank 2 selects Reject on the Unconfirmed Trade Screen, the system of the invention removes or replaces the price at step 78.

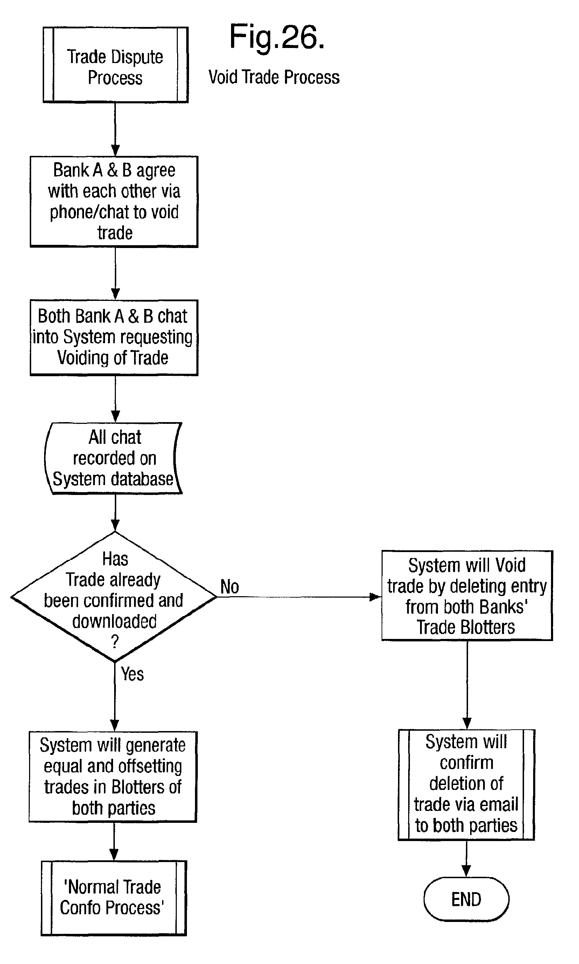

If Bank 2 selects Dispute on the Unconfirmed Trades Screen, the counterparties communicate directly with one another at step 84. If the counterparties agree to deal with one another, the deal is confirmed and posted to their respective deal blotters at step 84. If the counterparties choose not to deal with one another, the system of the invention replaces or removes the price at step 78. The void trade process is shown in the summary flowchart of Figure 26 for instances where a trade needs to be cancelled.

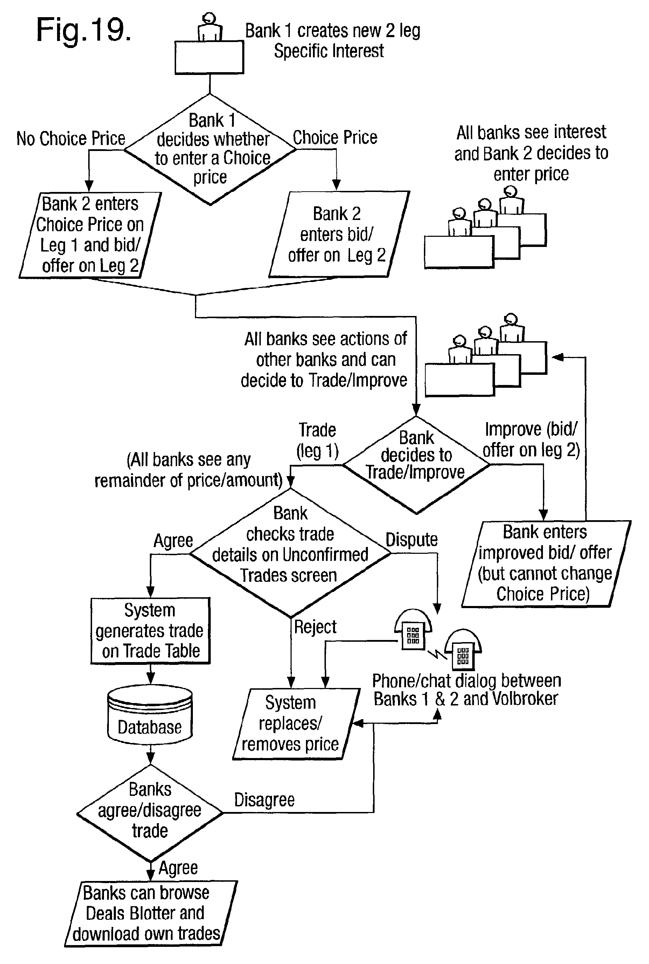

Figure 19 shows a summary flow chart for trading 2-leg specific-interests, i.e. a custom-built option strategy.

When a surface price taker requests autodealing, the system of the invention checks that the deal is below the size threshold for autodealing and then makes a composite price from the best bid and the best offer from the volatility surfaces that have been provided. The surface price taker will then be shown the price and may deal on it as previously described. The provision of a composite is simple in that the system takes the best bid and the best offer for any option that is requested. However, the system also includes checks to ensure that a submitted surface is not arbitrageable against any other surface that the system already holds. Deal details and deal booking are handled in the same way as for other options described.

It should be appreciated that whilst the above examples have been described in the context of volatilities and volatility surfaces, other measures of the value of an option contract may be employed in addition, or as an alternative, to volatility.

## Claims

1. A computerised system for trading an option contract for a financial instrument, the system comprising:
a computer network comprising a plurality of user terminals each capable of communicating with a central computing unit;
a volatility data storage unit arranged to store, when in use, at least one set of volatility data associated with the option contract and respectively obtained from at least one of the plurality of user terminals having an associated volatility surface;
a calculation unit supported by the central computing unit and arranged to implement, when in use, a protocol for identifying from the at least one set of volatility data a best price; and
a communications unit supported by the central computing unit and arranged to communicate in real time, when in use, to a first of the plurality of user terminals the best price in response to a request for a quote from the first of the plurality of user terminals for the options contract;
wherein the at least one set of volatility data is obtained from the volatility surface associated with, and accessible by, at least one associated user terminal;
wherein the central computing unit further comprises a volatility request mechanism configured to specify a format of requests from, and prices to, the user terminals; and
wherein the prices are generated dynamically by the central computing unit to avoid holding the complete surface in an associated memory.

2. A system according to claim 1, wherein the best price is a highest bid to buy the option contract and a lowest bid to sell the option contract, the highest bid to buy the option contract and the lowest bid to sell the option contract defining a first range.

3. The system as claimed in claim 1 wherein the central computing unit is one of the following: a web server; a network server.

4. The system as claimed in any preceding claim, wherein, in use, surface price takers can ask for an anonymous surface price.

5. The system as claimed in any preceding claim, wherein the plurality of user terminals is used by users to provide contributions to the volatility surface, wherein the contribution comprises a volatility price corresponding to an option contact for each of a series of deltas and expiring every business day in the year following the date of the contribution; and a bid/offer spread.

6. The system as claimed in claim 5, wherein the series of deltas are from 5% to 95%

7. The system as claimed in claim 5, wherein the bid/offer spread is provided in terms of units of volatility.

8. The system as claimed in claim 7, wherein the central computing unit is further arranged to specify the volatility used for options expiring on every business day in the next year and for every delta from 5% to 95%.

9. A system as claimed in claim 2, wherein the plurality of user terminals comprises:
a second user terminal arranged, when in use, to communicate an associated set of volatility data to the central computing unit, the associated set of volatility data comprising an associated bid to buy and an associated offer to sell defining a second range; and the system further comprises:
an arbitrage identification unit capable of accessing the highest bid to buy the option contract and the lowest bid to sell the option contract identified by the calculation unit and, when in use, arranged in response to the communication of the associated set of volatility data to determine if the second range does not mathematically overlap the first range.

10. A system as claimed in claim 9, wherein the central computing unit is arranged to identify the existence of arbitrage to the second user terminal in response to the second range not mathematically overlapping the first range.

11. A system as claimed in either of claims 1 or 10, wherein the first user terminal further comprises a user interface unit arranged to communicate, when in use, the best price to a user of the first user terminal.

12. A system as claimed in any preceding claim, wherein the central computing unit is arranged to receive an indication that at least one of the at least one set of volatility data associated with the option contract has changed.

13. A system as claimed in claim 12, wherein the volatility data storage unit is arranged to receive an updated set of volatility data corresponding to the at least one of the at least one set of volatility data that has changed.

14. A system as claimed in any of claims 9 to 13, wherein the first user terminal is prevented from executing a purchase of the option contract when the first range does not mathematically overlap the second range.

15. A system as claimed in any one of the Claims 9 to 14, wherein, in response to the first range not mathematically overlapping the second range, the central computing unit permits, when in use, the second user terminal to trade the option contract with a user terminal associated with the lowest bid to sell and/or the highest offer to buy.

16. A system as claimed in any one of claims 9 to 15, wherein the at least one set of volatility data comprises one or more of the following:
a time-limited set of volatility data having a predetermined period of time associated therewith, the central computing unit being arranged, when in use, to withdraw the time-limited set of volatility data in response to the predetermined period of time expiring;
a value-limited set of volatility data having a predetermined threshold value associated therewith, the central computing unit being arranged, when in use, to withdraw the value-limited set of volatility data in response to a current market price for the option contract being equal to or crossing the threshold value.

17. A system as claimed in any preceding claim, further comprising:
a first tier of users, the central computing unit supporting a protocol to permit the first tier of users to enter runs of offers to sell and bids to buy option contracts, enter offers to sell specific interest option contracts and bids to buy specific interest option contracts, deal on offers to sell option contracts or bids to buy option contracts and improve on outstanding offers to sell option contracts or bids to buy option contracts.

18. A system as claimed in claim 17, further comprising:
a second tier of users, the central computing unit supporting a protocol to permit the second tier of users to enter runs of offers to sell option contracts and bids to buy option contracts, deal on offers to sell option contracts or bids to buy option contracts and improve on outstanding offers to sell option contracts or bids to buy option contracts, the central computing unit supporting a protocol to preclude the second tier of users from entering offers to sell specific interest option contracts and bids to buy specific interest option contracts.

19. A system as claimed in claim 18, further comprising:
a third tier of users, the central computing unit supporting a protocol to permit the third tier of users to deal on offers to sell or bids to buy option contracts, the central computing unit supporting a protocol to preclude the third tier of users from entering runs of offers to sell and bids to buy option contracts, entering offers to sell specific interest option contracts and bids to buy specific interest option contracts, and improving on outstanding offers to sell option contracts or bids to buy option contracts.

20. A method of trading an option contract via a computer network comprising a plurality of user terminals each capable of communicating with a central computing unit, the method comprising the steps of:
respectively obtaining from at least one of the plurality of user terminals having an associated volatility surface at least one set of volatility data associated with the option contract;
in the central computing unit identifying from the at least one set of volatility data a best price;
communicating in real time from the central computing unit to a first of the plurality of user terminals the best price in response to a request from the first of the plurality of user terminals for the options contract; and
obtaining the at least one set of volatility data from the volatility surface associated with, and accessible by, at least one associated user terminal;
wherein the central computing unit comprises a volatility request mechanism configured to specify a format of requests from, and prices to, the user terminals; and
wherein the prices are generated dynamically by the central computing unit to avoid holding the complete volatility surface in an associated memory.

21. A method as claimed in claim 20, wherein the best price is a highest bid to buy the option contract and a lowest bid to sell the option contract, the highest bid to buy the option contract and the lowest bid to sell the option contract defining a first range.

22. The method as claimed in either claim 20 or 21, wherein surface price takers can ask for an anonymous surface price.

23. The method as claimed in any of claims 20 to 22, wherein the plurality of user terminals is used by users to provide contributions to the volatility surface, wherein the contribution comprises a volatility price corresponding to an option contact for each of a series of deltas and expiring every business day in the year following the date of the contribution; and a bid/offer spread.

24. The method as claimed in claim 23, wherein the series of deltas are from 5% to 95%

25. The method as claimed in claim 23, wherein the bid/offer spread is provided in terms of units of volatility.

26. The method as claimed in claim 24, further comprising specifying the volatility used for options expiring on every business day in the next year and for every delta from 5% to 95%.

27. A method as claimed in claim 20, further comprising:
providing an additional set of volatility data, the additional set of volatility data comprising an associated bid to buy and an associated offer to sell defining a second range;
accessing the highest bid to buy the option contract and the lowest bid to sell the option contract; and
in response to the provision of the additional set of volatility data, determining if the second range does not mathematically overlap the first range.
